# EUROPEAN PATENT APPLICATION

(11) **EP 4 814 576 A1**
(43) Date of publication of application: **30.09.2026**
(21) Application number: 24910547.9
(22) Date of filing: 02.12.2024
(51) Int. Cl.: G03B 17/12, G02B 13/00, G02B 9/64

(54) **CAMERA MODULE AND ELECTRONIC DEVICE**

(30) Priority: 29.12.2023 CN 202311872169
(71) Applicant: Huawei Technologies Co., Ltd., Shenzhen, Guangdong 518129 (CN)
(72) Inventor: ZHANG, Kaiyuan, Shenzhen, Guangdong 518129 (CN); KUO, Li-Te, Shenzhen, Guangdong 518129 (CN); QIN, Zhenkai, Shenzhen, Guangdong 518129 (CN); WANG, Xiaofang, Shenzhen, Guangdong 518129 (CN); WANG, Hailan, Shenzhen, Guangdong 518129 (CN); DING, Xiaoheng, Shenzhen, Guangdong 518129 (CN); ZHENG, Lichang, Shenzhen, Guangdong 518129 (CN); WU, Yushun, Shenzhen, Guangdong 518129 (CN); GUO, Xiuqing, Shenzhen, Guangdong 518129 (CN); JIANG, Yushan, Shenzhen, Guangdong 518129 (CN); PENG, Shusheng, Shenzhen, Guangdong 518129 (CN)
(74) Representative: Gill Jennings & Every LLP
(86) International application number: PCT/CN2024/136101
(87) International publication number: WO 2025/139615

(57) **Abstract**

A camera module and an electronic device are provided, to address a technical problem that a lens assembly has a relatively large dimension along an optical axis direction, resulting in a large volume of the electronic device. In the camera module, an optical sensor is disposed on an image side of the lens assembly; the lens assembly includes a plurality of lenses disposed along the optical axis direction, and a focal length f0 of a lens, among the plurality of lenses, that is away from the optical sensor and a maximum entrance pupil diameter EPD of the camera module satisfy: (I); and a focus adjustment apparatus is connected to the lens assembly to perform focus adjustment. The dimension of the lens assembly along the optical axis direction can be reduced, to reduce a dimension of the camera module along the optical axis direction, thereby reducing a volume of the camera module and a volume of the electronic device.

## Description

This application claims priority to Chinese Patent Application No. 202311872169.1, filed with the China National Intellectual Property Administration on December 29, 2023 and entitled "CAMERA MODULE AND ELECTRONIC DEVICE", which is incorporated herein by reference in its entirety.

### TECHNICAL FIELD

Embodiments of this application relate to the field of image obtaining device technologies, and specifically, to a camera module and an electronic device.

### BACKGROUND

A camera module is typically provided in an electronic device (like a mobile phone or a tablet computer), and an external image may be obtained by using the camera module, to implement functions such as photographing or video recording. The camera module includes a lens assembly and an optical sensor disposed on an image side of the lens assembly, and through adjustment of a distance between the lens assembly and the optical sensor, an image is formed on the optical sensor via the lens assembly. However, the lens assembly has a relatively large dimension along an optical axis direction, resulting in a large volume of the electronic device.

### SUMMARY

Embodiments of the present invention provide a camera module and an electronic device, to reduce a dimension of a lens assembly along an optical axis direction.

According to a first aspect, an embodiment of this application provides a camera module, including a lens assembly, an optical sensor, and a focus adjustment apparatus, where the optical sensor is disposed on an image side of the lens assembly; the lens assembly includes a plurality of lenses disposed along an optical axis direction, and a focal length f0 of a lens, among the plurality of lenses, that is away from the optical sensor and a maximum entrance pupil diameter EPD of the camera module satisfy: $1 \leq \frac{f 0}{EPD} \leq 1.8$; and the focus adjustment apparatus is connected to the lens assembly to perform focus adjustment.

According to the foregoing configuration, the focal length f0 of the lens, among the plurality of lenses, that is away from the optical sensor and the maximum entrance pupil diameter EPD of the camera module satisfy: $1 \leq \frac{f 0}{EPD} \leq 1.8$, so that a dimension of the lens assembly along the optical axis direction can be reduced, to reduce a dimension of the camera module along the optical axis direction, thereby reducing a volume of the camera module and a volume of an electronic device.

In some embodiments that may include the foregoing embodiment, the lens assembly includes a first lens group and a second lens group that are disposed along the optical axis direction, and the second lens group is located between the first lens group and the optical sensor; each of the first lens group and the second lens group includes at least two lenses; and a focal power of the first lens group is positive, a focal power of the second lens group is negative, and a focal power of the lens assembly is positive. With such a configuration, light is converged by the lens assembly and then irradiated onto the optical sensor, and a chromatic aberration and an aberration can be corrected through a combination of the first lens group and the second lens group, thereby improving imaging quality of the camera module.

In some embodiments that may include the foregoing embodiment, the focus adjustment apparatus is connected to the first lens group, to drive the first lens group to move along the optical axis. With such a configuration, the focus adjustment apparatus 250 drives the first lens group to move, so that a quantity of lenses driven by the focus adjustment apparatus can be reduced, thereby improving a focus adjustment speed. In addition, the focus adjustment apparatus with a small driving force may be used to perform focus adjustment, thereby facilitating miniaturization of the camera module.

In some embodiments that may include the foregoing embodiment, the camera module further includes a lens holder, a light-transmitting channel is provided on the lens holder, the lens assembly is disposed in the light-transmitting channel, a guide post is disposed on a side wall of the light-transmitting channel, and a center line of the guide post is parallel to the optical axis; a guide groove is provided on a side wall of the first lens group, and the guide post is slidably disposed in the guide groove, to guide the first lens group; and the focus adjustment apparatus is connected to the guide groove. Due to high size precision of the guide groove, the focus adjustment apparatus connected to the guide groove can improve focus adjustment precision.

In some embodiments that may include the foregoing embodiment, a focal length f1 of the first lens group, a focal length f2 of the second lens group, and a focal length f of the lens assembly satisfy: $0 < \frac{f 1}{f} < 1.2$, and $\frac{f 2}{f} < 0$. With such a configuration, focal powers of the first lens group and the second lens group can be appropriately distributed, to increase an image area (a large format) on the optical sensor and improve the imaging quality.

In some embodiments that may include the foregoing embodiment, a refractive index ind1 of the lens, among the plurality of lenses, that is away from the optical sensor satisfies: 1.6 < ind1. With such a configuration, a refractive index of a lens that is close to the light-transmitting cover plate is approximately the same as a refractive index of glass. The lens may be made of glass, which can reduce a volume of the lens, thereby further reducing the volume of the camera module.

In some embodiments that may include the foregoing embodiment, a distance ct, along the optical axis direction, between two adjacent lenses that are in the first lens group and that are away from the optical sensor satisfies: 0.03 mm < ct < 0.2 mm. With such a configuration, a distance between two adjacent lenses that are close to the light-transmitting cover plate is large, thereby facilitating adjustment of a position of each lens in the first lens group.

In some embodiments that may include the foregoing embodiment, the first lens group includes a first lens, a second lens, a third lens, a fourth lens, and a fifth lens that are disposed along a direction toward the optical sensor, and the second lens group includes a sixth lens and a seventh lens that are disposed along a direction away from the first lens group. With such a configuration, on the premise of ensuring the imaging quality, a quantity of lenses in the first lens group and a quantity of lenses in the second lens group are small, so that the volume of the camera module can be reduced.

In some embodiments that may include the foregoing embodiment, focal powers of the first lens, the fourth lens, the fifth lens, and the sixth lens are all positive, and focal powers of the second lens, the third lens, and the seventh lens are all negative.

In some embodiments that may include the foregoing embodiment, focal powers of the first lens, the fifth lens, and the sixth lens are all positive, and focal powers of the second lens, the third lens, the fourth lens, and the seventh lens are all negative.

In some embodiments that may include the foregoing embodiment, focal powers of the first lens, the third lens, the fifth lens, and the sixth lens are all positive, and focal powers of the second lens, the fourth lens, and the seventh lens are all negative.

In some embodiments that may include the foregoing embodiment, the first lens group includes a first lens, a second lens, a third lens, and a fourth lens that are disposed along a direction toward the optical sensor, and the second lens group includes a fifth lens, a sixth lens, and a seventh lens that are disposed along a direction away from the first lens group.

In some embodiments that may include the foregoing embodiment, focal powers of the first lens, the fourth lens, and the sixth lens are all positive, and focal powers of the second lens, the third lens, the fifth lens, and the seventh lens are all negative.

According to a second aspect, an embodiment of this application further provides an electronic device, including a housing and the camera module described above, where the camera module is disposed on the housing.

In some embodiments that may include the foregoing embodiment, the camera module further includes a light-transmitting cover plate and a driving apparatus, and the light-transmitting cover plate is disposed on an object side of the lens assembly; and the driving apparatus is connected to the light-transmitting cover plate, the driving apparatus is configured to, in response to a first operation of a user, drive the light-transmitting cover plate to move to a first position in a direction away from the lens assembly, and the driving apparatus is further configured to, in response to a second operation of the user, drive the light-transmitting cover plate to move to a second position in a direction toward the lens assembly.

With such a configuration, the light-transmitting cover plate is located on the object side of the lens assembly, the optical sensor is located on the image side of the lens assembly, and the focus adjustment apparatus is connected to the lens assembly to perform focus adjustment; and the driving apparatus is connected to the light-transmitting cover plate, the driving apparatus drives the light-transmitting cover plate to move to the first position in the direction away from the lens assembly in a first state, and the driving apparatus drives the light-transmitting cover plate to move to the second position in the direction toward the camera assembly in a second state. When the camera module is in use, the driving apparatus drives the light-transmitting cover plate to move in the direction away from the lens assembly, thereby increasing a focusing stroke and improving imaging performance of the camera module.

When the camera module is not in use, the driving apparatus drives the light-transmitting cover plate to move in the direction toward the lens assembly, to reduce the dimension of the camera module along the optical axis direction, thereby reducing a thickness of the electronic device.

In some embodiments that may include the foregoing embodiment, the camera module further includes a telescopic apparatus, the telescopic apparatus is disposed on the object side of the lens assembly, the telescopic apparatus and the lens assembly are spaced apart, and the light-transmitting cover plate is disposed at an end that is of the telescopic apparatus and that is away from the lens assembly; and the driving apparatus is connected to the telescopic apparatus, to drive the telescopic apparatus to move along a direction parallel to the optical axis.

In some embodiments that may include the foregoing embodiment, the housing encloses an accommodating cavity, an opening communicated with the accommodating cavity is provided on the housing, at least a part of the camera modules is disposed in the accommodating cavity, and the light-transmitting cover plate is disposed directly facing the opening; and the driving apparatus drives the light-transmitting cover plate to move out of the accommodating cavity in a first state.

In some embodiments that may include the foregoing embodiment, an f-number F of the camera module, the maximum entrance pupil diameter EPD of the camera module, a focal length EFL of the camera module at infinity, a maximum image height IH of the optical sensor, and a length TTL of the lens assembly along the optical axis direction when the light-transmitting cover plate is in the second position satisfy: $1.8 < \frac{{IH}^{2}}{{FTTL}^{2}} < 3$, and $\frac{EFL}{EPD} < 1.6$. According to the foregoing configuration, on the premise of ensuring the imaging quality, the length of the lens assembly along the optical axis direction when the light-transmitting cover plate is in the second position can be reduced, thereby further reducing the dimension of the lens assembly along the optical axis direction when the light-transmitting cover plate is in the second position, and further reducing the thickness of the electronic device. In addition, the maximum image height IH of the optical sensor may also be increased (to implement a large format), and the camera module may also have a large aperture (to implement a large aperture).

In some embodiments that may include the foregoing embodiment, a distance maxct between the first lens group and the second lens group along the optical axis direction when the light-transmitting cover plate is in the first position satisfies: 5 mm > maxct > 1 mm. With such a configuration, the lens assembly can be ensured to have a sufficient focusing stroke, to improve the imaging quality.

In some embodiments that may include the foregoing embodiment, the distance maxct between the first lens group and the second lens group along the optical axis direction when the light-transmitting cover plate is in the first position and the length TTL of the lens assembly along the optical axis direction when the light-transmitting cover plate is in the second position satisfy: $0.1 < \frac{maxct}{TTL} < 0.5$. The distance between the first lens group and the second lens group varies significantly between a working state and a non-working state. In the working state, the distance between the first lens group and the second lens group is large, so that the lens assembly has a sufficient focusing stroke. In the non-working state, the distance between the first lens group and the second lens group is small, so that the volume of the camera module can be reduced.

In some embodiments that may include the foregoing embodiment, the distance maxct between the first lens group and the second lens group along the optical axis direction when the light-transmitting cover plate is in the first position and the maximum image height IH of the optical sensor satisfy: $0.1 < \frac{maxct}{IH} < 0.5$. On the premise of ensuring that the lens assembly has a sufficient focusing stroke, the optical sensor has a large image height, to implement a large format.

According to a third aspect, an embodiment of this application further provides an electronic device, including a housing and the camera module described above, where the camera module is disposed on the housing.

In some embodiments that may include the foregoing embodiment, the electronic device further includes a light-transmitting cover plate and a driving apparatus, and the light-transmitting cover plate is disposed on an object side of the lens assembly; and the driving apparatus is connected to the light-transmitting cover plate, the driving apparatus is configured to, in response to a first operation of a user, drive the light-transmitting cover plate to move to a first position in a direction away from the lens assembly, and the driving apparatus is further configured to, in response to a second operation of the user, drive the light-transmitting cover plate to move to a second position in a direction toward the lens assembly.

In some embodiments that may include the foregoing embodiment, the electronic device further includes a telescopic apparatus, the telescopic apparatus is disposed on the object side of the lens assembly, the telescopic apparatus and the lens assembly are spaced apart, and the light-transmitting cover plate is disposed at an end that is of the telescopic apparatus and that is away from the lens assembly; and the driving apparatus is connected to the telescopic apparatus, to drive the telescopic apparatus to move along a direction parallel to the optical axis.

In some embodiments that may include the foregoing embodiment, the housing encloses an accommodating cavity, an opening communicated with the accommodating cavity is provided on the housing, at least a part of the camera modules is disposed in the accommodating cavity, and the light-transmitting cover plate is disposed directly facing the opening; and the driving apparatus is configured to, in response to the first operation of the user, drive the light-transmitting cover plate to move out of the accommodating cavity.

The electronic device provided in this embodiment of this application includes the camera module in the foregoing embodiment. Therefore, same technical effects can be achieved, and a same technical problem can be resolved.

### BRIEF DESCRIPTION OF DRAWINGS

FIG. 1 is an exploded view of an electronic device according to an embodiment of this application;
FIG. 2 is a diagram 1 of a structure of a camera module when a light-transmitting cover plate is in a first position according to an embodiment of this application;
FIG. 3 is a diagram 2 of a structure of a camera module when a light-transmitting cover plate is in a first position according to an embodiment of this application;
FIG. 4 is a diagram of a structure of an electronic device when a light-transmitting cover plate is in a first position according to an embodiment of this application;
FIG. 5 is a diagram 1 of a structure of a camera module when a light-transmitting cover plate is in a second position according to an embodiment of this application;
FIG. 6 is a diagram 2 of a structure of a camera module when a light-transmitting cover plate is in a second position according to an embodiment of this application;
FIG. 7 is a diagram of a structure of an electronic device when a light-transmitting cover plate is in a second position according to an embodiment of this application;
FIG. 8 is a diagram 1 of a structure of each lens in a camera module according to an embodiment of this application;
FIG. 9 is a diagram of performance curves at different spatial frequencies for the camera module shown in FIG. 8;
FIG. 10 is a diagram of an optical axial chromatic aberration of the camera module shown in FIG. 8;
FIG. 11 is a diagram 2 of a structure of each lens in a camera module according to an embodiment of this application;
FIG. 12 is a diagram of performance curves at different spatial frequencies for the camera module shown in FIG. 11;
FIG. 13 is a diagram of an optical axial chromatic aberration of the camera module shown in FIG. 11;
FIG. 14 is a diagram 3 of a structure of each lens in a camera module according to an embodiment of this application;
FIG. 15 is a diagram of performance curves at different spatial frequencies for the camera module shown in FIG. 14;
FIG. 16 is a diagram of an optical axial chromatic aberration of the camera module shown in FIG. 14;
FIG. 17 is a diagram 4 of a structure of each lens in a camera module according to an embodiment of this application;
FIG. 18 is a diagram of performance curves at different spatial frequencies for the camera module shown in FIG. 17;
FIG. 19 is a diagram of an optical axial chromatic aberration of the camera module shown in FIG. 17;
FIG. 20 is a diagram 5 of a structure of each lens in a camera module according to an embodiment of this application;
FIG. 21 is a diagram of performance curves at different spatial frequencies for the camera module shown in FIG. 20;
FIG. 22 is a diagram of an optical axial chromatic aberration of the camera module shown in FIG. 20;
FIG. 23 is a diagram 6 of a structure of each lens in a camera module according to an embodiment of this application;
FIG. 24 is a diagram of performance curves at different spatial frequencies for the camera module shown in FIG. 23; and
FIG. 25 is a diagram of an optical axial chromatic aberration of the camera module shown in FIG. 23.

Reference numerals: 10: electronic device; 11: display panel; 12: housing; 13: middle frame; 14: rear cover; 15: accommodating cavity; 16: battery; 17: mainboard; 18: opening; 20: camera module; 211: light-transmitting cover plate; 212: telescopic apparatus; 220: lens assembly; 221: first lens group; 222: second lens group; 230: optical filter; 240: optical sensor; 250: focus adjustment apparatus; 260: driving apparatus; 270: aperture stop; L1: first lens; L2: second lens; L3: third lens; L4: fourth lens; L5: fifth lens; L6: sixth lens; L7: seventh lens.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms "first", "second", and the like mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features.

In addition, in embodiments of this application, orientation terms such as "upper", "lower", "left", "right", "horizontal", and "vertical" are defined relative to illustrated orientations in which components in the accompanying drawings are placed. It should be understood that these directional terms are relative concepts that are used for relative description and clarification, and may vary correspondingly depending on a change in the orientations in which the components in the accompanying drawings are placed.

In embodiments of this application, unless otherwise specified and limited, the term "connection" should be understood in a broad sense. For example, the "connection" may be a fixed connection, an electrical connection, a detachable connection, an integration, a direct connection, or an indirect connection implemented through an intermediate medium.

An embodiment of this application provides an electronic device. The electronic device may include a mobile phone, a tablet computer, a smart band, a smartwatch, or the like. The electronic device is not limited in embodiments of this application. The electronic device includes a camera module, and a function like photographing or video recording may be implemented by using the camera module.

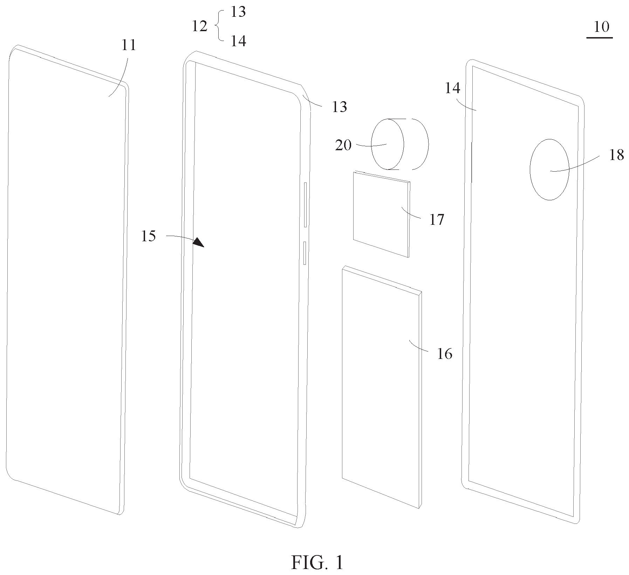

The following uses an example in which the electronic device is a mobile phone for description. It may be understood that the electronic device in embodiments of this application is not limited to the mobile phone. Refer to FIG. 1. The electronic device 10 includes a housing 12 and a display panel 11. The housing 12 may include a middle frame 13 and a rear cover 14. The display panel 11 covers one side of the middle frame 13, the rear cover 14 covers the other side of the middle frame 13, and the middle frame 13, the rear cover 14, and the display panel 11 enclose an accommodating cavity 15. The electronic device 10 further includes a battery 16 and a mainboard 17 that are disposed in the accommodating cavity 15. The mainboard 17 and the battery 16 may be fastened to the middle frame 13, and the mainboard 17 is electrically connected to both the battery 16 and the display panel 11.

In some embodiments, the camera module 20 may be a rear-facing camera. Correspondingly, an opening 18 is provided on the rear cover 14, the camera module 20 may be disposed in the accommodating cavity 15, and the camera module 20 directly faces the opening 18. The camera module 20 is electrically connected to the mainboard 17, to perform photographing or video recording under the control of the mainboard 17.

In another embodiment, the camera module 20 may alternatively be a front-facing camera. Correspondingly, an opening 18 is provided on the display panel 11, the camera module 20 is disposed in the accommodating cavity 15, and the camera module 20 directly faces the opening 18. The camera module 20 is electrically connected to the mainboard 17, to perform photographing or video recording under the control of the mainboard 17.

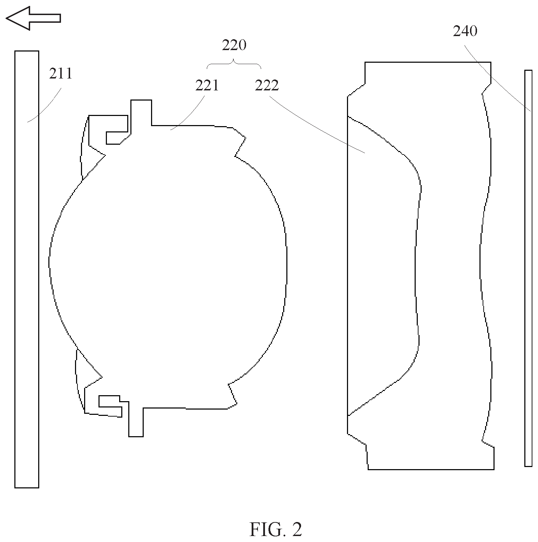

Refer to FIG. 2. In this embodiment of this application, the camera module 20 includes a light-transmitting cover plate 211, a lens assembly 220, and an optical sensor 240. The light-transmitting cover plate 211, the lens assembly 220, and the optical sensor 240 may be disposed along an optical axis. The optical sensor 240 is located on an image side of the lens assembly 220. The light-transmitting cover plate 211 is located on an object side of the lens assembly 220. External light is received by the optical sensor 240 after passing through the light-transmitting cover plate 211 and the lens assembly 220, to form an image on the optical sensor 240. The optical sensor 240 is electrically connected to the mainboard 17 shown in FIG. 1, to convert the received image into an electrical signal, and send the electrical signal to the mainboard 17, thereby implementing photographing or video recording.

In the foregoing implementation, the optical sensor 240 may include a photosensitive device like a CCD image sensor or a CMOS image sensor. This is not limited in embodiments of this application, provided that the optical sensor 240 can convert the image generated by the lens assembly 220 into an electrical signal and sent the electrical signal to the mainboard 17. For example, the camera module 20 may further include a circuit board. The optical sensor 240 may be disposed on a surface of the circuit board. A circuit electrically connected to the optical sensor 240 is disposed on the circuit board. The circuit may be electrically connected to the mainboard 17, and the mainboard 17 is electrically connected to the optical sensor 240 through the circuit.

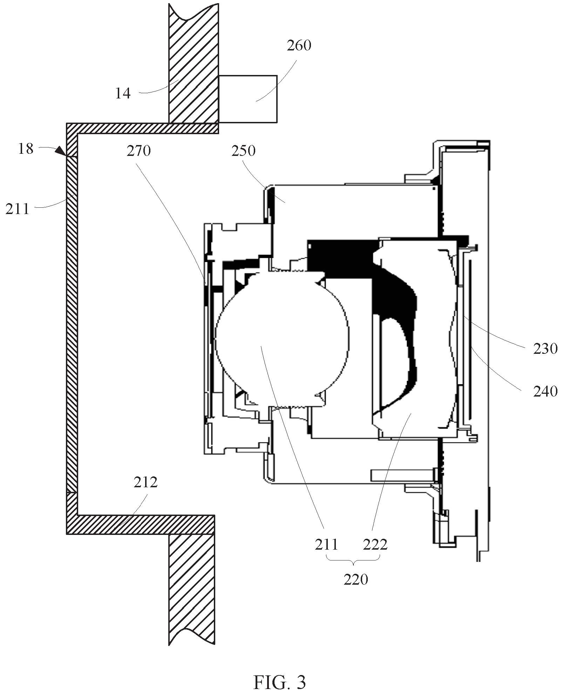

Refer to FIG. 3. In this embodiment of this application, the camera module 20 may further include an aperture stop 270 and an optical filter 230. The aperture stop 270 is disposed between the lens assembly 220 and the light-transmitting cover plate 211. The aperture stop 270 may limit a light flux of the lens assembly 220. For example, the aperture stop 270 may be a variable aperture stop 270, the variable aperture stop 270 may be electrically connected to the mainboard 17, and a light flux of the variable aperture stop 270 may be controlled by using the mainboard 17, to adapt to different shooting and video recording scenes. The optical filter 230 is disposed between the optical sensor 240 and the lens assembly 220. The optical filter 230 may filter light incident on the optical sensor 240, to remove wanted light, thereby improving imaging quality.

The lens assembly 220 includes a plurality of lenses disposed along the optical axis, and external light sequentially passes through the lenses and then forms an image on the optical sensor 240. A quantity of lenses in the lens assembly 220 is not limited in embodiments of this application. Properly setting the quantity of lenses and focal powers of the lenses can improve imaging definition of the lens assembly 220 on the optical sensor 240.

In this embodiment of this application, the camera module 20 further includes a focus adjustment apparatus 250, and the focus adjustment apparatus 250 is connected to the lens assembly 220 to perform focus adjustment. In some embodiments, the focus adjustment apparatus 250 may be connected to the lens assembly 220 and the circuit board. The focus adjustment apparatus 250 may drive the lens assembly 220 to move relative to the circuit board, to adjust a distance between the lens assembly 220 and the optical sensor 240, thereby improving definition of the image formed on the optical sensor 240.

Still refer to FIG. 3. In another embodiment, the focus adjustment apparatus 250 may be connected to several lenses in the lens assembly 220, to drive the lenses to move along the optical axis, thereby implementing focus adjustment. For example, the lens assembly 220 may include a first lens group 221 and a second lens group 222. The first lens group 221 and the second lens group 222 are disposed along the optical axis direction. Each of the first lens group 221 and the second lens group 222 includes at least two lenses. The second lens group 222 may be connected to the circuit board, so that a distance between the second lens group 222 and the optical sensor 240 is constant. The focus adjustment apparatus 250 may be connected to the first lens group 221. The focus adjustment apparatus 250 may drive the first lens group 221 to move along the optical axis, to adjust a distance between the first lens group 221 and the second lens group 222, thereby performing focus adjustment. With such a configuration, the focus adjustment apparatus 250 drives the first lens group 221 to move, so that a quantity of lenses driven by the focus adjustment apparatus 250 can be reduced, thereby improving a focus adjustment speed. In addition, the focus adjustment apparatus 250 with a small driving force may be used to perform focus adjustment, thereby facilitating miniaturization of the camera module 20.

For example, a focal power of the first lens group 221 is positive, a focal power of the second lens group 222 is negative, and a focal power of the lens assembly 220 is positive. With such a configuration, light is converged by the lens assembly 220 and then irradiated onto the optical sensor 240, and a chromatic aberration and an aberration can be corrected through a combination of the first lens group 221 and the second lens group 222, thereby improving the imaging quality of the camera module 20.

In some embodiments, each lens in the second lens group 222 may be an edge-cut lens, that is, a projection of each lens on the light sensor 240 is non-circular. Certainly, each lens in the second lens group 222 may alternatively be a non-edge-cut lens, that is, a projection of each lens on the light sensor 240 is circular.

In some embodiments, a light incident surface and/or a light exit surface of a lens, among the second lens group 222, that is close to the optical sensor 240 are/is a toric surface, to improve the imaging quality. In some implementations, a focal length f1 of the first lens group 221, a focal length f2 of the second lens group 222, and a focal length f of the lens assembly 220 satisfy: $0 < \frac{f 1}{f} < 1.2 , and \frac{f 2}{f} < 0 .$

With such a configuration, focal powers of the first lens group 221 and the second lens group 222 can be appropriately distributed, to increase an image area (a large format) on the optical sensor 240 and improve the imaging quality.

In the foregoing embodiment, the focus adjustment apparatus 250 may include a voice coil motor, a magnet of the voice coil motor may be disposed on the circuit board, and a coil of the voice coil motor may be connected to the first lens group 221, to drive the first lens group 221 to move along the optical axis when power is supplied to the coil of the voice coil motor, so that VCM focusing of the camera module 20 is implemented. Alternatively, the magnet of the voice coil motor is connected to the first lens group 221, and the coil of the voice coil motor is disposed on the circuit board, to drive the first lens group 221 to move along the optical axis when power is supplied to the coil of the voice coil motor, so that VCM focusing of the camera module 20 can also be implemented. Certainly, the focus adjustment apparatus 250 may also include a piezoelectric motor, the piezoelectric motor may include a piezoelectric ceramic, and the piezoelectric ceramic is connected to the first lens group 221. Power is supplied to the piezoelectric ceramic, so that the piezoelectric ceramic may deform, to drive the first lens group 221 to move along the optical axis, thereby implementing focus adjustment.

In some embodiments, the camera module 20 further includes a lens holder, a light-transmitting channel is provided on the lens holder, the lens assembly 220 is disposed in the light-transmitting channel, a guide post is disposed on a side wall of the light-transmitting channel, and a center line of the guide post is parallel to the optical axis; and a guide groove is provided on a side wall of the first lens group 221, and the guide post is slidably disposed in the guide groove, to guide the first lens group 221, thereby ensuring that a center line of the first lens group 221 is always collinear with the optical axis during focus adjustment. The focus adjustment apparatus 250 is connected to the guide groove. For example, the focus adjustment apparatus 250 is connected to a side wall and/or a bottom of the guide groove. Due to high size precision of the guide groove, the focus adjustment apparatus 250 connected to the guide groove can improve focus adjustment precision.

In some embodiments, the camera module 20 may further include a mobile apparatus. The mobile apparatus is connected to the first lens group 221, and the mobile apparatus may drive the first lens group 221 to move along the optical axis direction. When the light-transmitting cover plate is in a first position, the mobile apparatus may drive the first lens group 221 to move in a direction away from the optical sensor 240. For example, the mobile apparatus may include a voice coil motor or a piezoelectric motor. This is not limited in embodiments of this application.

It may be understood that the mobile apparatus and the focus adjustment apparatus 250 may be a same apparatus. Certainly, the mobile apparatus and the focus adjustment apparatus 250 may alternatively be different apparatuses. Correspondingly, the mobile apparatus may be connected to the first lens group 221 via the focus adjustment apparatus 250; or the focus adjustment apparatus 250 is connected to the first lens group 221 via the mobile apparatus. In this case, the mobile apparatus may be connected to the guide groove, to improve location precision of the first lens group during movement.

Still refer to FIG. 3. In this embodiment of this application, the light-transmitting cover plate 211 is located on the object side of the lens assembly 220. The light-transmitting cover plate 211 may implement functions such as protection and dust prevention for the lens assembly 220. A material of the light-transmitting cover plate 211 may include glass, resin, or the like. The material of the light-transmitting cover plate 211 is not limited in embodiments of this application. The camera module 20 further includes a driving apparatus 260, and the driving apparatus 260 is connected to the light-transmitting cover plate 211. In an implementation in which the camera module 20 includes the circuit board, the driving apparatus 260 may be disposed on the housing 12, and the driving apparatus 260 is configured to drive the light-transmitting cover plate 211 to move along the optical axis.

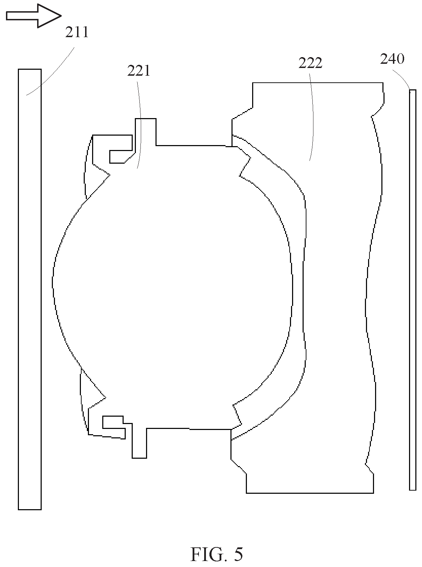

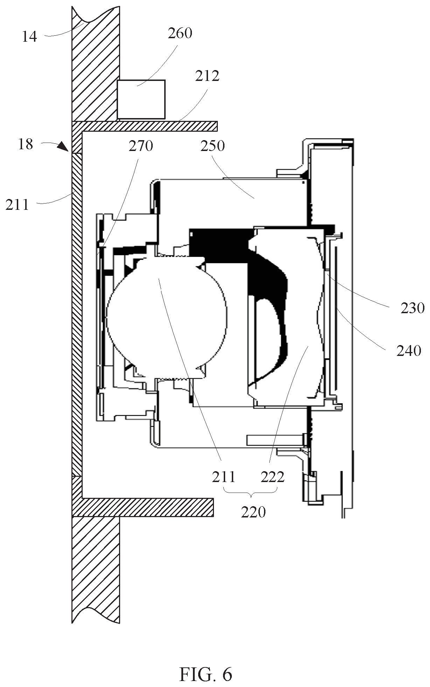

As shown in FIG. 2 and FIG. 3, the driving apparatus 260 is configured to, in response to a first operation of a user, drive the light-transmitting cover plate 211 to move to the first position in a direction away from the lens assembly 220, to increase a distance between the light-transmitting cover plate 211 and the optical sensor 240, thereby increasing a focusing stroke of the lens assembly 220, and ensuring that the camera module has a sufficient focusing travel distance when the camera module performs imaging from infinity to close object distances, to improve imaging performance. As shown in FIG. 5 and FIG. 6, the driving apparatus 260 is further configured to, in response to a second operation of the user, drive the light-transmitting cover plate 211 to move to a second position in a direction toward the lens assembly 220, to reduce a thickness of the camera module 20 along the optical axis direction, thereby facilitating miniaturization of the electronic device 10 shown in FIG. 1.

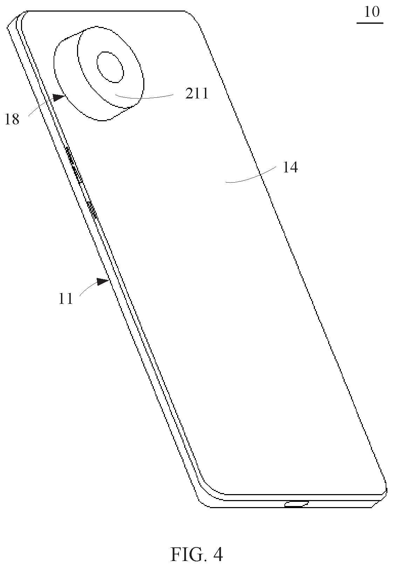

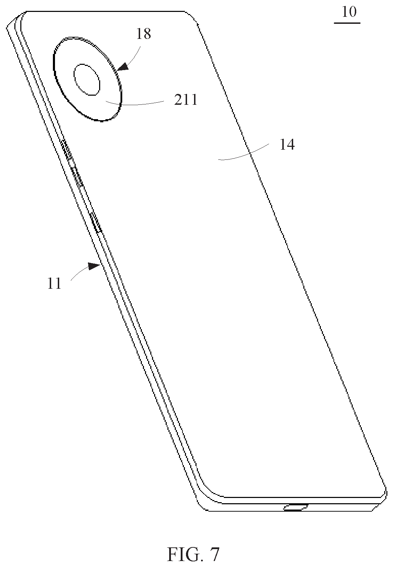

As shown in FIG. 1, in this embodiment of this application, the opening 18 communicated with the accommodating cavity 15 may be provided on the housing 12 (for example, the rear cover 14) of the electronic device 10, and the camera module 20 is disposed in the accommodating cavity 15. As shown in FIG. 3 and FIG. 4, in response to the first operation of the user, the driving apparatus 260 drives the light-transmitting cover plate 211 to extend out of the opening 18, to perform photographing or video recording. As shown in FIG. 6 and FIG. 7, in response to the second operation of the user, the driving apparatus 260 drives the light-transmitting cover plate 211 to move into the opening 18, to reduce a thickness of the electronic device 10. It may be understood that, when the light-transmitting cover plate 211 moves to the second position, the light-transmitting cover plate 211 may be located in the opening 18, and the light-transmitting cover plate 211 is flush with an outer surface of the housing 12, to improve a decoration effect of the electronic device 10. Certainly, in another implementation, when the light-transmitting cover plate 211 moves to the second position, the light-transmitting cover plate 211 may be partially located outside the opening 18, or there is a small distance between the light-transmitting cover plate 211 and the outer surface of the housing 12. This is not limited in embodiments of this application.

It may be understood that the first operation of the user may be that the user triggers an ON button or an app for photographing or video recording on the electronic device 10. After the light-transmitting cover plate 211 reaches the first position, the camera module 20 enters a working state (which may perform an action like photographing or focusing). The second operation of the user may be that the user triggers an OFF button or closes an app for photographing or video recording on the electronic device 10. The first position may be a position of the light-transmitting cover plate 211 when the distance between the light-transmitting cover plate 211 and the optical sensor 240 is the largest, and the second position may be a position of the light-transmitting cover plate 211 when the light-transmitting cover plate 211 is in contact with the lens assembly 220 or is about to be in contact with the lens assembly 220.

Still refer to FIG. 3 and FIG. 6. In some embodiments, the camera module 20 further includes a telescopic apparatus 212, the telescopic apparatus 212 is disposed on the object side of the lens assembly 220, the telescopic apparatus 212 and the lens assembly 220 are spaced apart, and the light-transmitting cover plate 211 is disposed at an end that is of the telescopic apparatus 212 and that is away from the lens assembly 220; and the telescopic apparatus 212 is disposed in the opening 18, the driving apparatus 260 is disposed on the housing 12, and the driving apparatus 260 is connected to the telescopic apparatus 212, to drive the telescopic apparatus 212 to move in a direction parallel to the optical axis. With such a configuration, in the first position, the telescopic apparatus 212 may implement sealing between the light-transmitting cover plate 211 and the rear cover 14, to prevent external impurities such as dust and water drops from entering the accommodating cavity 15 through the opening 18.

For example, the telescopic apparatus 212 may include a lens barrel disposed in the opening 18, a center line of the lens barrel is parallel to the optical axis, and the lens barrel is slidably connected to the rear cover 14; and the light-transmitting cover plate 211 is disposed at an end that is of the lens barrel and that is away from the lens assembly 220, the driving apparatus 260 is connected to the lens barrel, and the driving apparatus drives the lens barrel to move along the optical axis, thereby driving the light-transmitting cover plate 211 to move.

The driving apparatus 260 is not limited in embodiments of this application. The driving apparatus 260 may include a drive motor, a drive nut, and a screw. The drive motor may be disposed on the rear cover 14, the screw is rotatably connected to the rear cover 14, and the drive motor is in transmission connection to the screw. Correspondingly, the drive nut is connected to the telescopic apparatus 212, to drive the screw to cooperate with the drive nut. In response to the first operation, the drive motor drives the screw to rotate, and then drives, via the drive nut, the telescopic apparatus 212 to move in the direction away from the lens assembly 220 until the light-transmitting cover plate 211 moves to the first position. In response to the second operation, the drive motor drives the screw to rotate, and then drives, via the drive nut, the telescopic apparatus 212 to move in the direction toward the circuit board until the light-transmitting cover plate 211 moves to the second position.

In another implementation, the driving apparatus 260 may alternatively include an electromagnet and a spring. A coil of the electromagnet may be disposed on the rear cover 14, an armature of the electromagnet is connected to the telescopic apparatus 212, one end of the spring is connected to the rear cover 14, and the other end of the spring is connected to the telescopic apparatus 212. In response to the first operation, the coil of the electromagnet is energized, and may drive the armature to move in a direction away from the lens assembly 220, to drive the light-transmitting cover plate 211 to move in the direction away from the lens assembly 220 until the light-transmitting cover plate 211 moves to the first position. In the foregoing process, the spring is elastically deformed. In response to the second operation, the coil of the electromagnet is deenergized, and the spring drives, through an elastic force, the telescopic apparatus 212, to move in a direction toward the circuit board until the light-transmitting cover plate 211 is in the second position.

In this embodiment of this application, the telescopic apparatus 212 and the lens assembly 220 are spaced apart. In other words, the driving apparatus 260, the light-transmitting cover plate 211, and the telescopic apparatus 212 are all not connected to the lens assembly 220, to implement decoupling between the light-transmitting cover plate 211 and the lens assembly 220, and avoid affecting imaging of the lens assembly 220.

In some embodiments, the camera module 20 may further include a self-locking apparatus. The self-locking apparatus may lock the light-transmitting cover plate 211 when the light-transmitting cover plate 211 is in the first position, to prevent the light-transmitting cover plate 211 from moving during photographing. For example, the locking apparatus may include an electromagnet, an armature of the electromagnet may be connected to the lens barrel, and a coil of the electromagnet may be disposed on the rear cover 14. When the light-transmitting cover plate 211 is in the first position, the armature is close to the coil. In this case, the coil may attract the armature when the coil is energized, so that the light-transmitting cover plate 211 remains in the first position. Certainly, in another implementation, the locking apparatus may further include an electric push rod. The electric push rod is disposed on the rear cover, and a limiting hole is provided on the lens barrel. When the light-transmitting cover plate 211 is in the first position, a telescopic rod of the electric push rod extends outward and passes through the limiting hole, to limit the lens barrel and the light-transmitting cover plate.

Still refer to FIG. 3 and FIG. 6. In the camera module 20 provided in this embodiment of this application, the light-transmitting cover plate 211 is located on the object side of the lens assembly 220, the optical sensor 240 is located on the image side of the lens assembly 220, and the focus adjustment apparatus 250 is connected to the lens assembly 220 to perform focus adjustment; and the driving apparatus 260 is connected to the light-transmitting cover plate 211, the driving apparatus 260, in response to the first operation, drives the light-transmitting cover plate 211 to move to the first position in the direction away from the lens assembly 220, and the driving apparatus 260, in response to the second operation, drives the light-transmitting cover plate 211 to move to the second position in the direction toward the camera assembly. When the camera module 20 is in use, the driving apparatus 260 drives the light-transmitting cover plate 211 to move in the direction away from the lens assembly 220, thereby increasing a focusing stroke and improving imaging performance of the camera module 20. When the camera module 20 is not in use, the driving apparatus 260 drives the light-transmitting cover plate 211 to move in the direction toward the lens assembly 220, to reduce a dimension of the camera module 20 along the optical axis direction, thereby reducing the thickness of the electronic device 10.

In another embodiment, the light-transmitting cover plate 211, the driving apparatus 260, the telescopic apparatus 212, and the self-locking apparatus may not belong to the camera module 20. Correspondingly, the light-transmitting cover plate 211, the driving apparatus 260, the telescopic apparatus 212, and the self-locking apparatus may belong to the housing 12 or the electronic device 10. It may be understood that, when the light-transmitting cover plate 211, the driving apparatus 260, the telescopic apparatus 212, and the self-locking apparatus belong to the housing 12 or the electronic device 10, structures and connection relationships of the light-transmitting cover plate 211, the driving apparatus 260, the telescopic apparatus 212, and the self-locking apparatus are roughly the same as those when the light-transmitting cover plate 211, the driving apparatus 260, the telescopic apparatus 212, and the self-locking apparatus belong to the camera module 20.

In this embodiment of this application, the lens assembly 220 includes the plurality of lenses disposed along the optical axis direction, and a focal length f0 of a lens, among the plurality of lenses, that is close to the light-transmitting cover plate 211 and a maximum entrance pupil diameter EPD of the camera module 20 satisfy: $1 \leq \frac{f 0}{EPD} \leq 1.8 .$

With such a configuration, a dimension of the lens assembly 220 along the optical axis direction can be reduced, to reduce the dimension of the camera module 20 along the optical axis direction, thereby reducing a volume of the camera module 20.

It may be understood that an entrance pupil diameter of the camera module 20 may be a clear aperture. In some embodiments, the camera module 20 further includes an aperture stop 270 located between the lens assembly 220 and the light-transmitting cover plate 211. An amount of light entering the lens assembly 220 may be controlled by using the aperture stop 270. Correspondingly, the entrance pupil diameter may be a diameter of the aperture stop 270.

In this embodiment of this application, an f-number F of the camera module 20, the maximum entrance pupil diameter EPD of the camera module 20, a focal length EFL of the camera module 20 at infinity, a maximum image height IH of the optical sensor 240, and a length TTL of the lens assembly 220 along the optical axis direction when the light-transmitting cover plate 211 is in the second position satisfy: $1.8 < \frac{{IH}^{2}}{{FTTL}^{2}} < 3 , and \frac{EFL}{EPD} < 1.6 .$

According to the foregoing configuration, on the premise of ensuring the imaging quality, the length of the lens assembly 220 along the optical axis direction when the light-transmitting cover plate 211 is in the second position can be reduced, thereby further reducing the dimension of the lens assembly 220 along the optical axis direction when the light-transmitting cover plate 211 is in the second position, and further reducing the thickness of the electronic device 10. In addition, the maximum image height IH of the optical sensor 240 may also be increased (to implement a large format), and the camera module 20 may also have a large aperture (to implement a large aperture).

As shown in FIG. 3, in this embodiment of this application, a distance maxct between the first lens group 221 and the second lens group 222 along the optical axis direction when the light-transmitting cover plate 211 is in the first position satisfies: 5 mm>maxct>1 mm. With such a configuration, the lens assembly 220 can be ensured to have a sufficient focusing stroke, to improve the imaging quality.

In some embodiments, the distance maxct between the first lens group 221 and the second lens group 222 along the optical axis direction when the light-transmitting cover plate 211 is in the first position and the length TTL of the lens assembly 220 along the optical axis direction when the light-transmitting cover plate 211 is in the second position satisfy: $0.1 < \frac{maxct}{TTL} < 0.5 .$

According to the foregoing configuration, the distance between the first lens group 221 and the second lens group 222 varies significantly between a working state and a non-working state. In the working state, the distance between the first lens group 221 and the second lens group 222 is large, so that the lens assembly 220 has a sufficient focusing stroke. In the non-working state, the distance between the first lens group 221 and the second lens group 222 is small, so that the volume of the camera module 20 can be reduced.

In some embodiments, the distance maxct between the first lens group 221 and the second lens group 222 along the optical axis direction when the light-transmitting cover plate 211 is in the first position and the maximum image height IH of the optical sensor 240 satisfy: $0.1 < \frac{maxct}{IH} < 0.5 .$

According to the foregoing configuration, on the premise of ensuring that the lens assembly 220 has a sufficient focusing stroke, the optical sensor 240 has a large image height, to implement a large format.

In this embodiment of this application, a refractive index ind1 of the lens, among the plurality of lenses, that is close to the light-transmitting cover plate 211 satisfies: 1.6 < ind1. That is, a refractive index ind1 of a lens, among the first lens group 221, that is close to the light-transmitting cover plate 211 satisfies: 1.6 < ind1. With such a configuration, the refractive index of the lens that is close to the light-transmitting cover plate 211 is approximately the same as a refractive index of glass. The lens may be made of glass, which can reduce a volume of the lens, thereby further reducing the volume of the camera module 20.

In some embodiments, a distance ct between two adjacent lenses that are in the first lens group 221 and that are close to the light-transmitting cover plate 211 along the optical axis direction satisfies: 0.03 mm < ct < 0.2 mm. The distance between the two adjacent lenses that are close to the light-transmitting cover plate 211 is large, thereby facilitating adjustment of a position of each lens in the first lens group 221.

Still refer to FIG. 3 and FIG. 6. In the foregoing embodiment, the camera module 20 may have a tilt-shift function. Correspondingly, the camera module 20 may include a tilt-shift apparatus, and the tilt-shift apparatus may be connected to the lens assembly 220 or the optical sensor 240, so that an included angle is formed between an optical axis of the lens assembly 220 and the sensor 240. The included angle may be ±10°. The tilt-shift apparatus may further enable a point of intersection between the optical axis of the lens assembly 220 and the sensor 240 to move by a specific distance, where the distance may be ±1 mm. With such a configuration, the camera module 20 may adjust a focal plane and change a focus point, making the camera module 20 suitable for portrait photography, architectural photography, commercial photography, and the like.

In some embodiments, the camera module 20 may have an image stabilization function. For example, the camera module 20 may include an optical image stabilizer (Optical Image Stabilizer, OIS for short). The optical image stabilizer may be connected to the lens assembly 220, so that the lens assembly 220 may float relative to the optical sensor 240, to correct an optical axis shift of the lens assembly during shaking, thereby improving the imaging quality. It may be understood that the optical image stabilizer may alternatively be connected to the optical sensor 240, so that the optical sensor 240 floats relative to the lens assembly 220.

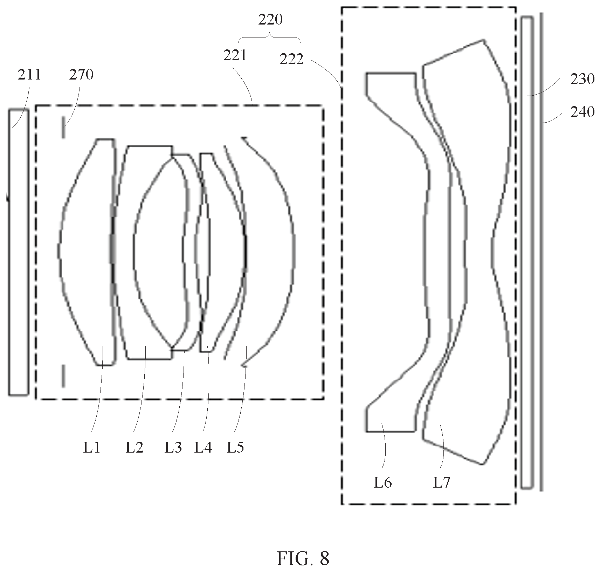

Refer to FIG. 8. In this embodiment of this application, the first lens group 221 includes a first lens L1, a second lens L2, a third lens L3, a fourth lens L4, and a fifth lens L5 that are disposed along a direction away from the light-transmitting cover plate 211, and the second lens group 222 includes a sixth lens L6 and a seventh lens L7 that are disposed along a direction away from the first lens group 221. A focal power of the first lens group 221 that includes the first lens L1, the second lens L2, the third lens L3, the fourth lens L4, and the fifth lens L5 is positive, and a focal power of the second lens group 222 that includes the sixth lens L6 and the seventh lens L7 is negative. With such a configuration, on the premise of ensuring the imaging quality, a quantity of lenses in the first lens group 221 and a quantity of lenses in the second lens group 222 are small, so that the volume of the camera module 20 can be reduced.

It may be understood that a quantity of lenses in the first lens group 221, a quantity of lenses in the second lens group 222, and focal powers of corresponding lenses are not limited in embodiments of this application. The following describes parameters of the camera module 20 by using a plurality of examples.

### Example 1

Still refer to FIG. 8. In this example, the first lens group 221 includes a first lens L1, a second lens L2, a third lens L3, a fourth lens L4, and a fifth lens L5 that are disposed along a direction away from the light-transmitting cover plate 211, and the second lens group 222 includes a sixth lens L6 and a seventh lens L7 that are disposed along a direction away from the first lens group 221. Focal powers of the first lens L1, the fourth lens L4, the fifth lens L5, and the sixth lens L6 are all positive, and focal powers of the second lens L2, the third lens L3, and the seventh lens L7 are all negative.

In some examples, the f-number F of the camera module 20, the focal length EFL of the camera module 20 at infinity, the maximum image height IH of the optical sensor 240, and the length TTL of the lens assembly 220 along the optical axis direction when the light-transmitting cover plate 211 is in the second position satisfy: $\frac{{IH}^{2}}{{FTTL}^{2}} = 2.45$. The maximum entrance pupil diameter EPD of the camera module 20 and the focal length EFL of the camera module 20 at infinity satisfy: $\frac{EFL}{EPD} = 1.25$. A refractive index ind1 of the first lens L1 is 1.855. A distance ct between the first lens L1 and the second lens along the optical axis direction is 0.0582 mm. The distance maxct between the first lens group 221 and the second lens group 222 along the optical axis direction when the light-transmitting cover plate 211 is in the first position and the length TTL of the lens assembly 220 along the optical axis direction when the light-transmitting cover plate 211 is in the second position satisfy: $\frac{maxct}{TTL} = 0.391$. The focal length f1 of the first lens group 221, the focal length f2 of the second lens group 222, and the focal length f of the lens assembly 220 satisfy: $\frac{f 1}{f} = 0.935$, and $\frac{f 2}{f} = - 1.31$.

Table 1a shows basic parameters of the camera module 20.

**Table 1a**

| Optical parameters | |
|---|---|
| Focal length f/mm | 9.9458 |
| F | 1.25 |
| IH/mm | 16.75 |
| maxct/mm | 3.6964 |
| TTL/mm | 10.05 |

Table 1b shows parameters of the lenses, where L1 is the first lens, L2 is the second lens, L3 is the third lens, L4 is the fourth lens, L5 is the fifth lens, L6 is the sixth lens, L7 is the seventh lens, S1 is a light incident surface of a corresponding lens, and S2 is a light exit surface of a corresponding lens.

**Table 1b**

| Lens | Surface number | Radius of curvature | Thickness | Refractive index | Abbe number |
|---|---|---|---|---|---|
| | Aperture stop | Infinity | -0.1000 | | |
| L1 | S1 | 6.682 | 1.4865 | 1.855 | 40.1 |
| | S2 | 30.045 | 0.0582 | | |
| L2 | S1 | 14.747 | 0.5688 | 1.677 | 19.2 |
| | S2 | 5.723 | 1.4136 | | |
| L3 | S1 | 7.382 | 0.3450 | 1.677 | 19.2 |
| | S2 | 6.665 | 0.3970 | | |
| L4 | S1 | -25.177 | 1.0089 | 1.5458 | 56.1 |
| | S2 | -6.401 | 0.0300 | | |
| L5 | S1 | -18.356 | 1.3675 | 1.556 | 47.5 |
| | S2 | -8.963 | 3.6964 | | |
| L6 | S1 | 23.056 | 0.7050 | 1.668 | 20.2 |
| | S2 | -85.549 | 0.4638 | | |
| L7 | S1 | 10.495 | 0.7550 | 1.655 | 21.3 |
| | S2 | 3.352 | 0.8614 | | |
| IR (optical filter) | S1 | Infinity | 0.3100 | 1.518 | 64.2 |
| | S2 | Infinity | 0.2295 | | |
| | Image surface | Infinity | 0 | | |

Table 1c shows conic constants and aspheric coefficients of the lenses.

**Table 1c**

| | | Conic constant K | A2 | A4 | A6 | A8 | A10 | A12 | A14 |
|---|---|---|---|---|---|---|---|---|---|
| L1 | S1 | 0 | 0 | -0.0002237 | 8.0146E-06 | -1.57E-05 | 4.948E-06 | -8.926E-07 | 9.0387E-08 |
| | S2 | 0 | 0 | -0.0037181 | 0.0017435 7 | -0.000433 | 6.298E-05 | -5.741E-06 | 3.2962E-07 |
| L2 | S1 | 0 | 0 | -0.006442 | 0.0030186 1 | -0.000729 | 0.0001036 | -9.011E-06 | 4.6793E-07 |
| | S2 | 0 | 0 | -0.0021157 | 0.0008909 2 | -0.000175 | 2.142E-05 | -2.089E-06 | 2.4845E-07 |
| L3 | S1 | 0 | 0 | -0.0097468 | 0.0007664 3 | -0.000236 | 5.634E-05 | -1.031E-05 | 1.2892E-06 |
| | S2 | 0 | 0 | -0.0097249 | 0.0005857 3 | -0.000101 | 3.364E-06 | 1.8136E-06 | -4.226E-07 |
| L4 | S1 | 0 | 0 | 0.0015326 | 0.0004546 | 0.0002672 | -9.94E-05 | 2.1102E-05 | -2.536E-06 |
| | S2 | 0 | 0 | 0.0049605 5 | -0.0046874 | 0.001945 | -0.000514 | 8.8338E-05 | -9.604E-06 |
| L5 | S1 | 0 | 0 | 0.0046785 5 | -0.0048279 | 0.0021899 | -0.000681 | 0.0001493 9 | -2.33E-05 |
| | S2 | 0 | 0 | -0.0011797 | -0.0004494 | 0.0002163 | -6.75E-05 | 9.9951E-06 | 5.114E-07 |
| L6 | S1 | 0 | 0 | 0.0037752 7 | -0.0010859 | 0.0001502 | -1.48E-05 | 5.2632E-07 | 2.188E-08 |
| | S2 | 0 | 0 | 0.0079473 9 | -0.0024539 | 0.0004954 | -6.63E-05 | 5.5514E-06 | -3.007E-07 |
| L7 | S1 | 0 | 0 | - | 0.0013563 | 0.0001463 | -4.17E- | 4.5648E- | -3.06E- |
| | | | | 0.0200323 | 3 | | 05 | 06 | 07 |
| | S2 | -0.8251 | 0 | -0.0282929 | 0.0041322 3 | -0.000483 | 4.394E-05 | -3.136E-06 | 1.7544E-07 |
| | | A16 | A18 | A20 | A22 | A24 | A26 | A28 | A30 |
| L1 | S1 | -5E-09 | 1.271E-10 | 4.5455E-14 | -4.561E-14 | 0 | 0 | 0 | 0 |
| | S2 | -1E-08 | 2.219E-10 | -1.817E-12 | 0 | 0 | 0 | 0 | 0 |
| L2 | S1 | -1E-08 | 1.416E-10 | 3.4883E-13 | 0 | 0 | 0 | 0 | 0 |
| | S2 | -3E-08 | 1.739E-09 | -4.338E-11 | 0 | 0 | 0 | 0 | 0 |
| L3 | S1 | -1E-07 | 5.401E-09 | -1.169E-10 | 0 | 0 | 0 | 0 | 0 |
| | S2 | 4.9E-08 | -3.05E-09 | 8.5684E-11 | -3.399E-13 | 0 | 0 | 0 | 0 |
| L4 | S1 | 1.8E-07 | -6.95E-09 | 1.1469E-10 | 7.8637E-14 | 0 | 0 | 0 | 0 |
| | S2 | 6.2E-07 | -2.1E-08 | 1.9515E-10 | 4.0289E-12 | 0 | 0 | 0 | 0 |
| L5 | S1 | 2.6E-06 | -2.03E-07 | 1.0997E-08 | -3.925E-10 | 8.284E-12 | -7.83E-14 | 0 | 0 |
| | S2 | -6E-07 | 1.248E-07 | -1.614E-08 | 1.3548E-09 | -7.51E-11 | 2.654E-12 | -5.424E-14 | 4.8697E-16 |
| L6 | S1 | -3E-09 | 8.642E-11 | -1.253E-12 | 4.7507E-15 | 3.189E-17 | -5.85E-20 | 1.9112E-21 | 0 |
| | S2 | 1.1E-08 | -2.59E-10 | 3.9476E-12 | -3.422E-14 | 1.199E-16 | 9.207E-20 | 3.3007E-22 | 0 |
| L7 | S1 | 1.4E-08 | -4.3E-10 | 9.2178E-12 | -1.321E-13 | 1.171E-15 | -5.11E-18 | -8.66E-22 | 6.8943E-23 |
| | S2 | -8E-09 | 2.548E-10 | -6.388E-12 | 1.1727E-13 | -1.52E-15 | 1.312E-17 | -6.753E-20 | 1.5634E-22 |

It may be learned from Table 1c that the first lens L1 to the seventh lens L7 include 14 surfaces in total, and all the 14 surfaces are aspheric surfaces. A surface shape z of each even-order aspheric surface satisfies: $z = \frac{{cr}^{2}}{1 + \sqrt{1 - {Kc}^{2} {r}^{2}}} + {\sum }_{i} {Air}^{i}$

Herein, z is a sag of the aspheric surface, r is a radial coordinate of the aspheric surface, c is a vertex curvature of the aspheric surface, K is a conic constant, and Ai represents an i^{th}-order aspheric coefficient.

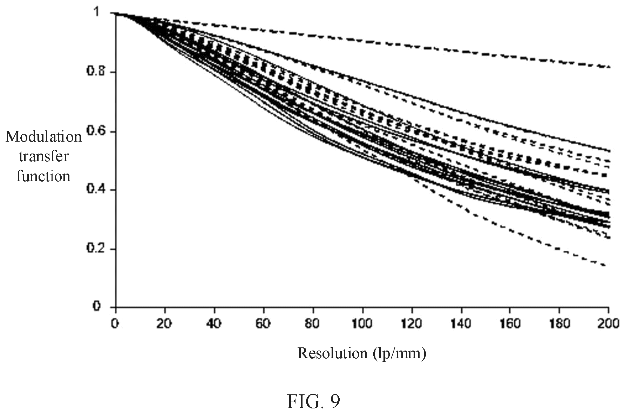

FIG. 9 is a diagram of performance curves at different spatial frequencies for the camera module 20 in this example. In FIG. 9, solid lines represent modulation transfer functions (MTFs) of light at different spatial frequencies in a sagittal direction, and dashed lines represent modulation transfer functions of light at different spatial frequencies in a tangential direction. It may be learned from FIG. 9 that when the resolution is less than 100 lp/mm, modulation transfer functions corresponding to the curves are all greater than 50%. In other words, modulation transfer functions in different fields of view are high in both the sagittal direction and the tangential direction, so that the camera module 20 has high imaging quality.

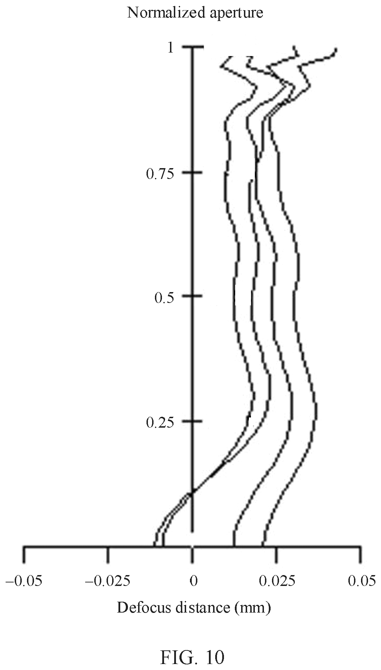

FIG. 10 is a diagram of an optical axial chromatic aberration of the camera module 20 in this example. Different curves in FIG. 10 correspond to light of different wavelengths, a vertical coordinate represents a normalized aperture, and a horizontal coordinate represents a defocus distance (a distance from the optical axis). It may be learned from FIG. 10 that an axial chromatic aberration of the camera module 20 in this example is good.

### Example 2

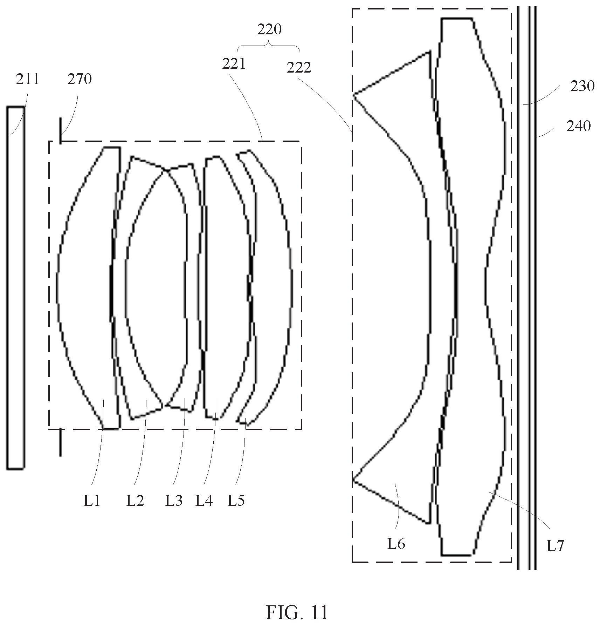

Refer to FIG. 11. In this example, the first lens group 221 includes a first lens L1, a second lens L2, a third lens L3, a fourth lens L4, and a fifth lens L5 that are disposed along a direction away from the light-transmitting cover plate 211, and the second lens group 222 includes a sixth lens L6 and a seventh lens L7 that are disposed along a direction away from the first lens group 221. Focal powers of the first lens L1, the fifth lens L5, and the sixth lens L6 are all positive, and focal powers of the second lens L2, the third lens L3, the fourth lens L4, and the seventh lens L7 are all negative.

In some examples, the f-number F of the camera module 20, the focal length EFL of the camera module 20 at infinity, the maximum image height IH of the optical sensor 240, and the length TTL of the lens assembly 220 along the optical axis direction when the light-transmitting cover plate 211 is in the second position satisfy: $\frac{{IH}^{2}}{{FTTL}^{2}} = 2.22$. The maximum entrance pupil diameter EPD of the camera module 20 and the focal length EFL of the camera module 20 at infinity satisfy: $\frac{EFL}{EPD} = 1.26$. A refractive index ind1 of the first lens is 1.855. A distance ct between the first lens and the second lens along the optical axis direction is 0.035 mm. The distance maxct = 2.8238 mm between the first lens group 221 and the second lens group 222 along the optical axis direction when the light-transmitting cover plate 211 is in the first position and the length TTL of the lens assembly 220 along the optical axis direction when the light-transmitting cover plate 211 is in the second position satisfy: $\frac{maxct}{TTL} = 0.38$. The focal length f1 of the first lens group 221, the focal length f2 of the second lens group 222, and the focal length f of the lens assembly 220 satisfy: $\frac{f 1}{f} = 0.967$, and $\frac{f 2}{f} = - 1.2$.

Table 2a shows basic parameters of the camera module 20.

**Table 2a**

| Optical parameters | |
|---|---|
| Focal length f/mm | 9.847 |
| F | 1.26 |
| IH/mm | 16.62 |
| maxct/mm | 3.8238 |
| TTL/mm | 9.45 |

Table 2b shows parameters of the lenses, where L1 is the first lens, L2 is the second lens, L3 is the third lens, L4 is the fourth lens, L5 is the fifth lens, L6 is the sixth lens, L7 is the seventh lens, S1 is a light incident surface of a corresponding lens, and S2 is a light exit surface of a corresponding lens.

**Table 2b**

| Lens | Surface number | Radius of curvature | Thickness | Refractive index | Abbe number |
|---|---|---|---|---|---|
| | Aperture stop | Infinity | 0.1000 | | |
| L1 | S1 | 5.979 | 1.4804 | 1.855 | 40.1 |
| | S2 | 22.469 | 0.0350 | | |
| L2 | S1 | 12.610 | 0.3500 | 1.687 | 18.1 |
| | S2 | 5.618 | 1.6692 | | |
| L3 | S1 | 12.012 | 0.3500 | 1.687 | 18.1 |
| | S2 | 8.970 | 0.2504 | | |
| L4 | S1 | -48.469 | 1.1557 | 1.57 | 37.3 |
| | S2 | 6.315 | 0.0607 | | |
| L5 | S1 | 3.818 | 1.1358 | 1.5458 | 56.1 |
| | S2 | -9.102 | 3.8238 | | |
| L6 | S1 | -23.634 | 0.7000 | 1.57 | 37.3 |
| | S2 | -6.701 | 0.0439 | | |
| L7 | S1 | 29.672 | 0.7500 | 1.545 | 56.1 |
| | S2 | 3.353 | 0.9110 | | |
| IR (optical filter) | S1 | Infinity | 0.3100 | 1.518 | 64.2 |
| | S2 | Infinity | 0.1979 | | |
| | Image surface | Infinity | 0 | | |

Table 2c shows conic constants and aspheric coefficients of the lenses.

**Table 2c**

| | | Conic constant K | A2 | A4 | A6 | A8 | A10 | A12 | A14 |
|---|---|---|---|---|---|---|---|---|---|
| L1 | S1 | 0.0414480 39 | 0 | -0.0001333 8 | 4.95452E -05 | -3.7592E-05 | 1.37152E -05 | -3.15049E -06 | 4.59458E -07 |
| | S2 | 0 | 0 | -0.0006439 2 | 0.0008575 14 | -0.0004517 8 | 0.0001545 31 | -3.87655E -05 | 7.13001E -06 |
| L2 | S1 | 0 | 0 | -0.0019911 6 | 0.0018701 13 | -0.0010701 8 | 0.0004813 39 | -0.0001677 16 | 4.29832E -05 |
| | S2 | 0 | 0 | -0.0009611 7 | 0.0008109 19 | -0.0005591 8 | 0.0003754 1 | -0.0001777 32 | 5.59578E -05 |
| L3 | S1 | 4.4913327 66 | 0 | -0.0081543 5 | 8.23076E -05 | -0.0005194 7 | 0.0004231 59 | -0.0002090 9 | 6.87719E -05 |
| | S2 | 2.2322268 19 | 0 | -0.0086846 | 0.0024010 04 | -0.0025486 | 0.0016795 53 | -0.0007589 | 0.0002434 87 |
| | | | | 9 | | 6 | | 01 | |
| L4 | S1 | 0 | 0 | -0.0039151 3 | 0.0042197 28 | -0.0030734 3 | 0.0015880 25 | -0.0005889 81 | 0.0001596 36 |
| | S2 | -0.2281960 5 | 0 | -0.0732439 5 | 0.0420197 42 | -0.0221196 2 | 0.0090274 74 | -0.0027873 92 | 0.0006498 95 |
| L5 | S1 | 0 | 0 | -0.07122155 | 0.039869603 | -0.02044627 | 0.008009499 | -0.002363908 | 0.000523814 |
| | S2 | 0 | 0 | 0.003299353 | -0.00179382 | 0.001254451 | -0.00070036 | 0.000263166 | -6.9459E-05 |
| L6 | S1 | 0 | 0 | -0.00014969 | 0.000671324 | -0.00016917 | -1.8411E-06 | 4.97089E-06 | -1.0432E-06 |
| | S2 | 0 | 0 | 0.006849725 | 0.001053223 | -0.00023837 | -1.9503E-06 | 4.59251E-06 | -6.1622E-07 |
| L7 | S1 | 0 | 0 | -0.02159166 | 0.00523062 | -0.00083352 | 9.04299E-05 | -6.6972E-06 | 3.41563E-07 |
| | S2 | -1 | 0 | -0.02748199 | 0.004836129 | -0.0007054 | 7.7407E-05 | -6.2524E-06 | 3.72225E-07 |
| | | A16 | A18 | A20 | A22 | A24 | A26 | A28 | A30 |
| L1 | S1 | -4.2613E-08 | 2.42348E -09 | -7.6907E-11 | 1.04077E -12 | 0 | 0 | 0 | 0 |
| | S2 | -9.4135E-07 | 8.70398E -08 | -5.4568E-09 | 2.19852E -10 | -5.1189E-12 | 5.22415E -14 | 0 | 0 |
| L2 | S1 | -7.9172E-06 | 1.03932E -06 | -9.6239E- | 6.14278E -09 | -2.5741E- | 6.37974E -12 | -7.09208E | 0 |
| | | | | 08 | | 10 | | -14 | |
| | S2 | -1.1807E-05 | 1.67848E -06 | -1.5879E-07 | 9.58718E -09 | -3.3448E-10 | 5.1327E-12 | 0 | 0 |
| L3 | S1 | -1.5534E-05 | 2.43641E -06 | -2.6419E-07 | 1.93847E -08 | -9.1647E-10 | 2.51152E-11 | -3.0162E-13 | 0 |
| | S2 | -5.6533E-05 | 9.57538E-06 | -1.1807E-06 | 1.04687E-07 | -6.4966E-09 | 2.67811E-10 | -6.58911E-12 | 7.32519E-14 |
| L4 | S1 | -3.2082E-05 | 4.80629E-06 | -5.3343E-07 | 4.30956E-08 | -2.4551E-09 | 9.3266E-11 | -2.11755E-12 | 2.17234E-14 |
| | S2 | -0.0001144 | 1.51577E-05 | -1.4992E-06 | 1.08802E-07 | -5.6177E-09 | 1.95145E-10 | -4.08536E-12 | 3.8924E-14 |
| L5 | S1 | -8.7052E-05 | 1.08099E -05 | -9.935E-07 | 6.63209E -08 | -3.1093E-09 | 9.64267E -11 | -1.76053E -12 | 1.41408E -14 |
| | S2 | 1.3221E-05 | -1.8364E-06 | 1.86306E -07 | -1.3665E-08 | 7.06215E -10 | -2.4418E-11 | 5.07508E -13 | -4.7975E-15 |
| L6 | S1 | 1.36001E-07 | -1.2266E-08 | 7.70225E -10 | -3.3387E-11 | 9.78138E -13 | -1.849E-14 | 2.03633E -16 | -9.9292E-19 |
| | S2 | 4.44901E-08 | -2.0729E-09 | 6.5893E-11 | -1.4463E-12 | 2.15505E -14 | -2.0721E-16 | 1.1496E-18 | -2.7504E-21 |
| L7 | S1 | -1.2011E-08 | 2.84899E -10 | -4.2042E-12 | 2.67602E -14 | 2.50044E -16 | -6.9147E-18 | 5.88449E -20 | -1.8952E-22 |
| | S2 | -1.6421E-08 | 5.37887E -10 | -1.3023E-11 | 2.29756E -13 | -2.8698E-15 | 2.40277E -17 | -1.20868E -19 | 2.75886E -22 |

It may be learned from Table 2c that the first lens L1 to the seventh lens L7 include 14 surfaces in total, and all the 14 surfaces are aspheric surfaces. A surface shape z of each even-order aspheric surface satisfies: $z = \frac{{cr}^{2}}{1 + \sqrt{1 - {Kc}^{2} {r}^{2}}} + {\sum }_{i} {Air}^{i}$

Herein, z is a sag of the aspheric surface, r is a radial coordinate of the aspheric surface, c is a vertex curvature of the aspheric surface, K is a conic constant, and Ai represents an i^{th}-order aspheric coefficient.

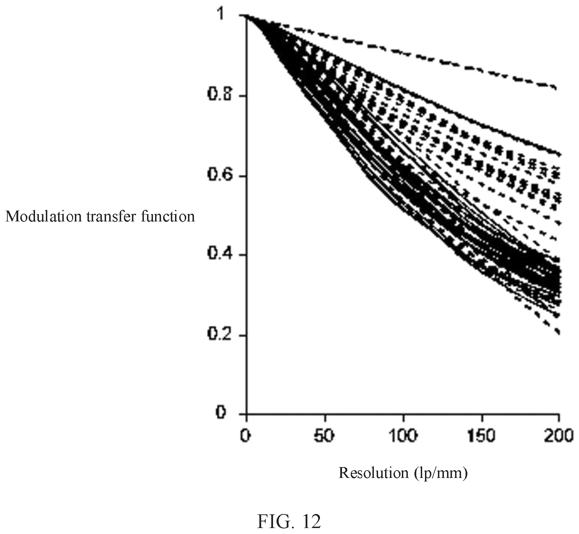

FIG. 12 is a diagram of performance curves at different spatial frequencies for the camera module 20 in this example. In FIG. 12, solid lines represent modulation transfer functions (MTFs) of light at different spatial frequencies in a sagittal direction, and dashed lines represent modulation transfer functions of light at different spatial frequencies in a tangential direction. It may be learned from FIG. 12 that when the resolution is less than 100 lp/mm, modulation transfer functions corresponding to the curves are all greater than 50%. In other words, modulation transfer functions in different fields of view are high in both the sagittal direction and the tangential direction, so that the camera module 20 has high imaging quality.

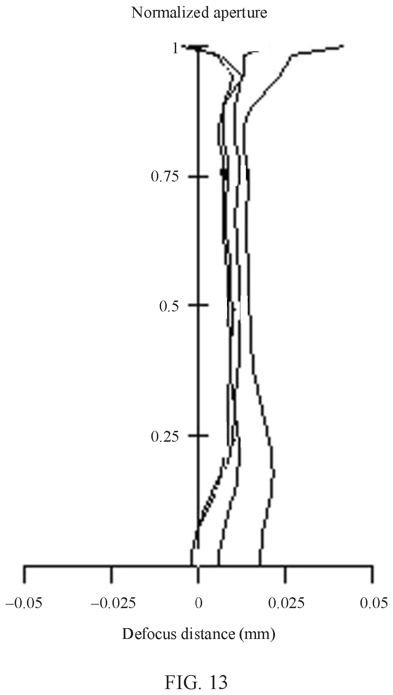

FIG. 13 is a diagram of an optical axial chromatic aberration of the camera module 20 in this example. Different curves in FIG. 13 correspond to light of different wavelengths, a vertical coordinate represents a normalized aperture, and a horizontal coordinate represents a defocus distance (a distance from the optical axis). It may be learned from FIG. 13 that an axial chromatic aberration of the camera module 20 in this example is good.

### Example 3

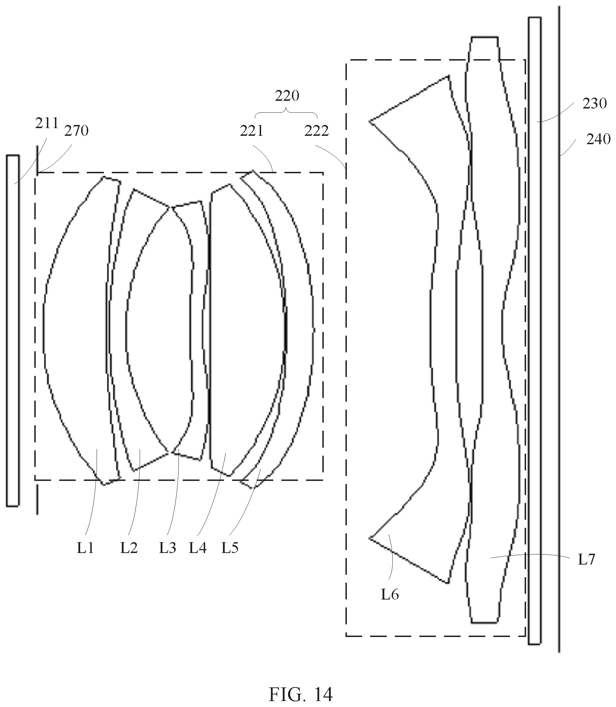

As shown in FIG. 14, a difference between this example and Example 1 lies in that the f-number F of the camera module 20, the focal length EFL of the camera module 20 at infinity, the maximum image height IH of the optical sensor 240, and the length TTL of the lens assembly 220 along the optical axis direction when the light-transmitting cover plate 211 is in the second position satisfy: $\frac{{IH}^{2}}{{FTTL}^{2}} = 2.09$. The maximum entrance pupil diameter EPD of the camera module 20 and the focal length EFL of the camera module 20 at infinity satisfy: $\frac{EFL}{EPD} = 1.24$. A refractive index ind1 of the first lens is 1.809. A distance ct between the first lens and the second lens along the optical axis direction is 0.09 mm. The distance maxct = 2.9789 between the first lens group 221 and the second lens group 222 along the optical axis direction when the light-transmitting cover plate 211 is in the first position and the length TTL of the lens assembly 220 along the optical axis direction when the light-transmitting cover plate 211 is in the second position satisfy: $\frac{maxct}{TTL} = 0.289 mm$*.* The focal length f1 of the first lens group 221, the focal length f2 of the second lens group 222, and the focal length f of the lens assembly 220 satisfy: $\frac{f 1}{f} = 0.9388$, and $\frac{f 2}{f} = - 1.126$.

Table 3a shows basic parameters of the camera module 20.

**Table 3a**

| Optical parameters | |
|---|---|
| Focal length f/mm | 9.79 |
| F | 1.24 |
| IH/mm | 16.6 |
| maxct/mm | 2.9789 |
| TTL/mm | 10.3 |

Table 3b shows parameters of the lenses, where L1 is the first lens, L2 is the second lens, L3 is the third lens, L4 is the fourth lens, L5 is the fifth lens, L6 is the sixth lens, L7 is the seventh lens, S1 is a light incident surface of a corresponding lens, and S2 is a light exit surface of a corresponding lens.

**Table 3b**

| Lens | Surface number | Radius of curvature | Thickness | Refractive index | Abbe number |
|---|---|---|---|---|---|
| | Aperture stop | Infinity | 0.11 | | |
| L1 | S1 | 5.6257 | 1.60 | 1.809 | 40.71 |
| | S2 | 15.5894 | 0.09 | | |
| L2 | S1 | 7.9480 | 0.43 | 1.687 | 19.2 |
| | S2 | 4.7411 | 1.60 | | |
| L3 | S1 | 7.6543 | 0.36 | 1.676 | 19.2 |
| | S2 | 6.1226 | 0.20 | | |
| L4 | S1 | 90.3276 | 1.93 | 1.545 | 54.1 |
| | S2 | -5.5230 | 0.04 | | |
| L5 | S1 | -9.0898 | 0.84 | 1.687 | 19.2 |
| | S2 | -8.6787 | 2.98 | | |
| L6 | S1 | 32.8422 | 0.68 | 1.644 | 23.52 |
| | S2 | -58.1254 | 0.49 | | |
| L7 | S1 | 7.9396 | 0.52 | 1.644 | 23.52 |
| | S2 | 3.0278 | 0.69 | | |
| IR (optical filter) | S1 | Infinity | 0.31 | 1.518 | 64.2 |
| | S2 | Infinity | 0.47 | | |
| | Image surface | Infinity | 0 | | |

Table 3c shows conic constants and aspheric coefficients of the lenses.

**Table 3c**

| | | Conic constant K | A2 | A4 | A6 | A8 | A10 | A12 | A14 |
|---|---|---|---|---|---|---|---|---|---|
| L1 | S1 | 0 | 0 | 6.569E-05 | -2.085E-05 | 2.908E-05 | -2.676E-05 | 1.384E-05 | -4.371E-06 |
| | S2 | 0 | 0 | -5.355E-03 | 2.608E-03 | -6.189E-04 | 3.347E-05 | 3.308E-05 | -1.438E-05 |
| L2 | S1 | 0 | 0 | -1.145E-02 | 4.951E-03 | -1.287E-03 | 2.263E-04 | -2.803E-05 | 2.384E-06 |
| | S2 | 0 | 0 | -5.294E-03 | 1.779E-03 | -2.464E-04 | -1.703E-05 | 1.398E-05 | -2.731E-06 |
| L3 | S1 | 0 | 0 | -1.253E-02 | 9.380E-04 | -3.037E-04 | 6.402E-05 | -8.793E-06 | 7.662E-07 |
| | S2 | 0 | 0 | -1.265E-02 | 1.575E-03 | -7.871E-04 | 4.532E-04 | -2.248E-04 | 8.525E-05 |
| L4 | S1 | 0 | 0 | -1.837E-03 | 6.090E-04 | -1.307E-04 | -4.491E-05 | 5.988E-05 | -2.685E-05 |
| | S2 | 0 | 0 | 6.613E-03 | -3.905E-03 | 5.534E-04 | 4.866E-04 | -3.723E-04 | 1.376E-04 |
| L5 | S1 | 0 | 0 | 5.201E-03 | -3.259E-03 | 5.023E-04 | 2.742E-04 | -2.159E-04 | 7.692E-05 |
| | S2 | 0 | 0 | -1.194E-03 | 3.882E-04 | -3.696E-04 | 1.564E-04 | -4.221E-05 | 7.711E-06 |
| L6 | S1 | 0 | 0 | -9.071E- | 7.994E- | -3.089E- | 6.033E- | -8.492E- | 9.370E- |
| | | | | 04 | 04 | 04 | 05 | 06 | 07 |
| | S2 | 0 | 0 | -8.915E-04 | 2.167E-03 | -7.713E-04 | 1.667E-04 | -2.438E-05 | 2.481E-06 |
| L7 | S1 | 0 | 0 | -3.852E-02 | 8.583E-03 | -1.496E-03 | 2.005E-04 | -1.928E-05 | 1.318E-06 |
| | S2 | -1 | 0 | -3.951E-02 | 8.057E-03 | -1.291E-03 | 1.535E-04 | -1.332E-05 | 8.427E-07 |
| | | A16 | A18 | A20 | A22 | A24 | A26 | A28 | A30 |
| L1 | S1 | 9.07E-07 | -1.29E-07 | 1.28E-08 | -8.84E-10 | 4.19673E -11 | -1.305E-12 | 2.39968E -14 | -1.977E-16 |
| | S2 | 3.30E-06 | -5.01E-07 | 5.29E-08 | -3.92E-09 | 2.00E-10 | -6.67E-12 | 1.31783E -13 | -1.164E-15 |
| L2 | S1 | -1.30E-07 | 4.04E-09 | -5.32E-11 | 0.00E+00 | 0.00E+00 | 0.00E+00 | 0.00E+00 | 0 |
| | S2 | 2.79E-07 | -1.51E-08 | 3.36E-10 | 0.00E+00 | 0.00E+00 | 0.00E+00 | 0 | 0 |
| L3 | S1 | -4.30E-08 | 2.30E-09 | -1.50E-10 | 5.37E-12 | -2.67E-14 | 0.00E+00 | 0.00E+00 | 0 |
| | S2 | -2.39E-05 | 4.86E-06 | -7.09E-07 | 7.31E-08 | -5.18E-09 | 2.40E-10 | -6.53E-12 | 7.93E-14 |
| L4 | S1 | 6.70E-06 | -1.02E-06 | 9.49E-08 | -4.80E-09 | 5.18E-11 | 8.04E-12 | -4.34E-13 | 7.19E-15 |
| | S2 | -3.291E-05 | 5.48E-06 | -6.49E-07 | 5.47E-08 | -3.21E-09 | 1.25E-10 | -2.88E-12 | 3.00E-14 |
| L5 | S1 | -1.76E-05 | 2.81E-06 | -3.21E-07 | 2.62E-08 | -1.49E-09 | 5.66E-11 | -1.29E-12 | 1.32E-14 |
| | S2 | -9.73E-07 | 8.49E-08 | -5.03E-09 | 1.93E-10 | -4.34E-12 | 4.33E-14 | 0.00E+00 | 0.00E+00 |
| L6 | S1 | -9.23E-08 | 8.17E-09 | -5.71E-10 | 2.84E-11 | -9.48E-13 | 2.02E-14 | -2.46E-16 | 1.32E-18 |
| | S2 | -1.79E-07 | 9.27E-09 | -3.45E-10 | 9.15E-12 | -1.69E-13 | 2.06E-15 | -1.49E-17 | 4.84E-20 |
| L7 | S1 | -6.49E-08 | 2.32E-09 | -6.04E-11 | 1.13E-12 | -1.48E-14 | 1.29E-16 | -6.67E-19 | 1.56E-21 |
| | S2 | -3.89E-08 | 1.32E-09 | -3.25E-11 | 5.76E-13 | -7.14E-15 | 5.87E-17 | -2.87E-19 | 6.31E-22 |

It may be learned from Table 3c that the first lens L1 to the seventh lens L7 include 14 surfaces in total, and all the 14 surfaces are aspheric surfaces. A surface shape z of each even-order aspheric surface satisfies: $z = \frac{{cr}^{2}}{1 + \sqrt{1 - {Kc}^{2} {r}^{2}}} + {\sum }_{i} {Air}^{i}$

Herein, z is a sag of the aspheric surface, r is a radial coordinate of the aspheric surface, c is a vertex curvature of the aspheric surface, K is a conic constant, and Ai represents an i^{th}-order aspheric coefficient.

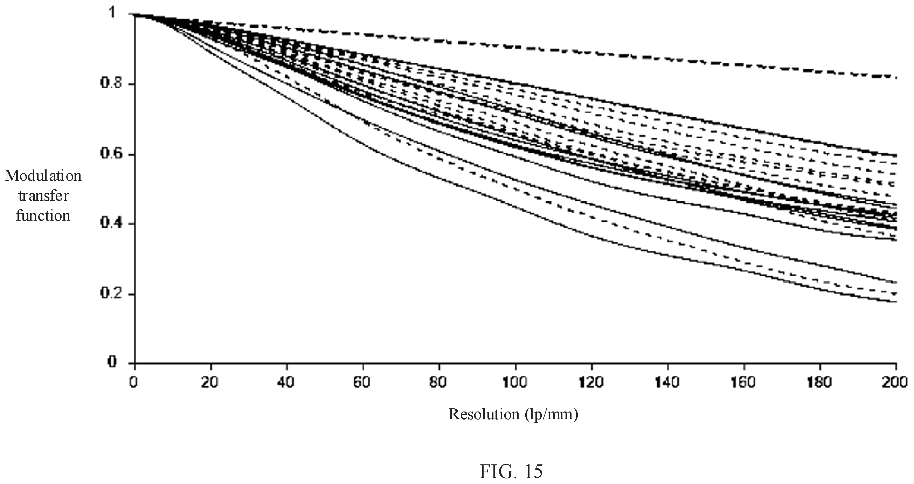

FIG. 15 is a diagram of performance curves at different spatial frequencies for the camera module 20 in this example. In FIG. 15, solid lines represent modulation transfer functions (MTFs) of light at different spatial frequencies in a sagittal direction, and dashed lines represent modulation transfer functions of light at different spatial frequencies in a tangential direction. It may be learned from FIG. 15 that when the resolution is less than 100 lp/mm, modulation transfer functions corresponding to the curves are all greater than 45%. In other words, modulation transfer functions in different fields of view are high in both the sagittal direction and the tangential direction, so that the camera module 20 has high imaging quality.

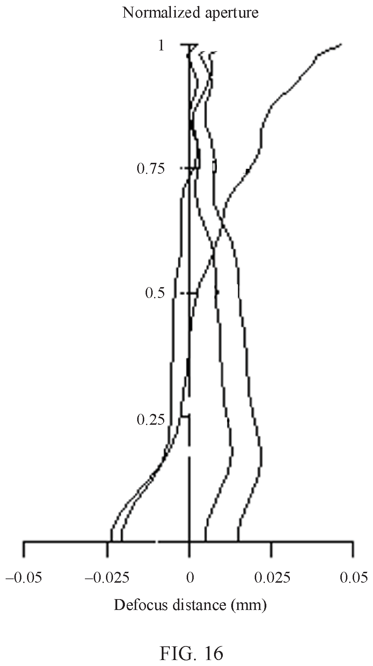

FIG. 16 is a diagram of an optical axial chromatic aberration of the camera module 20 in this example. Different curves in FIG. 16 correspond to light of different wavelengths, a vertical coordinate represents a normalized aperture, and a horizontal coordinate represents a defocus distance (a distance from the optical axis). It may be learned from FIG. 16 that an axial chromatic aberration of the camera module 20 in this example is good.

### Example 4

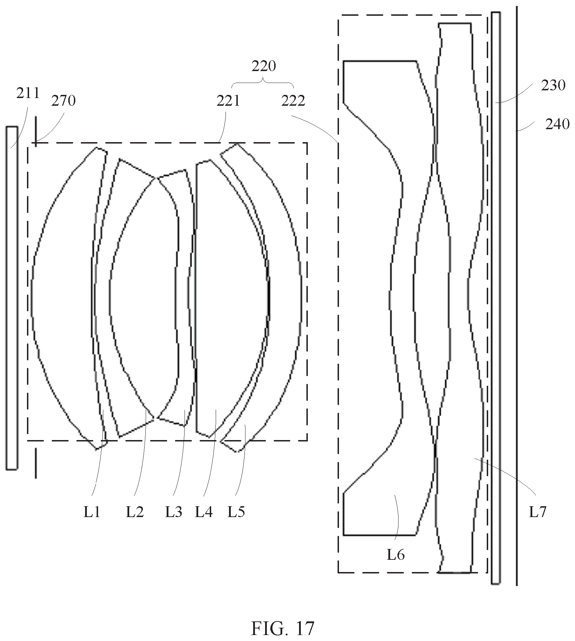

As shown in FIG. 17, a difference between this example and Example 1 lies in that the f-number F of the camera module 20, the focal length EFL of the camera module 20 at infinity, the maximum image height IH of the optical sensor 240, and the length TTL of the lens assembly 220 along the optical axis direction when the light-transmitting cover plate 211 is in the second position satisfy: $\frac{{IH}^{2}}{{FTTL}^{2}} = 2.0$. The maximum entrance pupil diameter EPD of the camera module 20 and the focal length EFL of the camera module 20 at infinity satisfy: $\frac{EFL}{EPD} = 1.15$. A refractive index ind1 of the first lens is 1.809. A distance ct between the first lens and the second lens along the optical axis direction is 0.08 mm. The distance maxct = 2.42 mm between the first lens group 221 and the second lens group 222 along the optical axis direction when the light-transmitting cover plate 211 is in the first position and the length TTL of the lens assembly 220 along the optical axis direction when the light-transmitting cover plate 211 is in the second position satisfy: $\frac{maxct}{TTL} = 0.22$. The focal length f1 of the first lens group 221, the focal length f2 of the second lens group 222, and the focal length f of the lens assembly 220 satisfy: $\frac{f 1}{f} = 0.97$, and $\frac{f 2}{f} = - 1.26$.

Table 4a shows basic parameters of the camera module 20.

**Table 4a**

| Optical parameters | |
|---|---|
| Focal length f/mm | 9.6 |
| F | 1.15 |
| IH/mm | 16.62 |
| maxct/mm | 2.42 |
| TTL/mm | 10.95 |

Table 4b shows parameters of the lenses, where L1 is the first lens, L2 is the second lens, L3 is the third lens, L4 is the fourth lens, L5 is the fifth lens, L6 is the sixth lens, L7 is the seventh lens, S1 is a light incident surface of a corresponding lens, and S2 is a light exit surface of a corresponding lens.

**Table 4b**

| Lens | Surface number | Radius of curvature | Thickness | Refractive index | Abbe number |
|---|---|---|---|---|---|
| | Aperture stop | Infinity | -0.12 | | |
| L1 | S1 | 5.946 | 1.66 | 1.809 | 40.71 |
| | S2 | 27.830 | 0.08 | | |
| L2 | S1 | 7.925 | 0.41 | 1.687 | 19.2 |
| | S2 | 4.301 | 1.80 | | |
| L3 | S1 | 8.693 | 0.36 | 1.676 | 19.2 |
| | S2 | 6.695 | 0.19 | | |
| L4 | S1 | 42.789 | 2.00 | 1.545 | 54.1 |
| | S2 | -5.436 | 0.04 | | |
| L5 | S1 | -7.634 | 0.89 | 1.687 | 19.2 |
| | S2 | -7.968 | 2.42 | | |
| L6 | S1 | 11.872 | 0.65 | 1.644 | 23.52 |
| | S2 | 22.562 | 0.95 | | |
| L7 | S1 | 9.557 | 0.52 | 1.644 | 23.52 |
| | S2 | 3.447 | 0.68 | | |
| IR (optical filter) | S1 | Infinity | 0.21 | 1.518 | 64.2 |
| | S2 | Infinity | 0.46 | | |
| | Image surface | Infinity | 0 | | |

Table 4c shows conic constants and aspheric coefficients of the lenses.

**Table 4c**

| | | Conic constant K | A2 | A4 | A6 | A8 | A10 | A12 | A14 |
|---|---|---|---|---|---|---|---|---|---|
| L1 | S1 | 0 | 0 | 1.624E-04 | -7.552E-05 | 1.046E-04 | -7.680E-05 | 3.474E-05 | -1.034E-05 |
| | S2 | 0 | 0 | 1.590E-03 | -6.114E-05 | -8.125E-05 | 6.921E-05 | -3.310E-05 | 1.014E-05 |
| L2 | S1 | 0 | 0 | -3.759E-03 | 8.262E-04 | -1.146E-04 | -1.170E-06 | 2.758E-06 | -4.440E-07 |
| | S2 | 0 | 0 | -6.205E-03 | 1.020E-03 | -9.729E-05 | -1.692E-05 | 7.192E-06 | -1.140E-06 |
| L3 | S1 | 1.331295564 | 0 | -1.018E-02 | 7.922E-04 | -3.084E-04 | 7.849E-05 | -1.480E-05 | 1.867E-06 |
| | S2 | 0 | 0 | -1.053E-02 | 1.716E-03 | -9.500E-04 | 4.670E-04 | -1.776E-04 | 5.056E-05 |
| L4 | S1 | 0 | 0 | -2.555E-03 | 1.058E-03 | -5.916E-04 | 2.204E-04 | -4.312E-05 | 7.699E-07 |
| | S2 | 0 | 0 | 4.101E-03 | 2.254E-03 | -3.571E-03 | 1.862E-03 | -5.877E-04 | 1.278E-04 |
| L5 | S1 | 0 | 0 | 3.112E- | 2.085E- | -2.995E- | 1.475E- | -4.415E- | 9.087E- |
| | | | | 03 | 03 | 03 | 03 | 04 | 05 |
| | S2 | 0 | 0 | -1.320E-03 | 5.238E-04 | -3.376E-04 | 1.099E-04 | -2.413E-05 | 3.918E-06 |
| L6 | S1 | 0 | 0 | 1.796E-03 | 8.260E-04 | -5.785E-04 | 1.597E-04 | -2.967E-05 | 3.954E-06 |
| | S2 | 0 | 0 | 5.749E-03 | 5.218E-04 | -4.421E-04 | 9.886E-05 | -1.365E-05 | 1.291E-06 |
| L7 | S1 | 0 | 0 | -2.494E-02 | 5.226E-03 | -9.721E-04 | 1.331E-04 | -1.243E-05 | 8.086E-07 |
| | S2 | -1 | 0 | -2.815E-02 | 5.237E-03 | -8.391E-04 | 1.001E-04 | -8.611E-06 | 5.371E-07 |

| | | A16 | A18 | A20 | A22 | A24 | A26 | A28 | A30 |
|---|---|---|---|---|---|---|---|---|---|
| L1 | S1 | 2.12E-06 | -3.05E-07 | 3.14E-08 | -2.28E-09 | 1.14005E -10 | -3.7505E-12 | 7.28393E -14 | -6.323E-16 |
| | S2 | -2.11E-06 | 3.07E-07 | -3.16E-08 | 2.29E-09 | -1.14E-10 | 3.71E-12 | -7.10504E -14 | 6.04626E -16 |
| L2 | S1 | 3.60E-08 | -1.54E-09 | 2.75E-11 | 0.00E+00 | 0.00E+00 | 0.00E+00 | 0.00E+00 | 0 |
| | S2 | 9.90E-08 | -4.60E-09 | 8.85E-11 | 0.00E+00 | 0.00E+00 | 0.00E+00 | 0 | 0 |
| L3 | S1 | -1.48E-07 | 6.80E-09 | -1.38E-10 | 0.00E+00 | 0.00E+00 | 0.00E+00 | 0.00E+00 | 0 |
| | S2 | -1.08E-05 | 1.75E-06 | -2.09E-07 | 1.82E-08 | -1.11E-09 | 4.47E-11 | -1.07E-12 | 1.14E-14 |
| L4 | S1 | 1.77E-06 | -4.78E-07 | 6.76E-08 | -6.01E-09 | 3.48E-10 | -1.28E-11 | 2.72E-13 | -2.55E-15 |
| | S2 | -2.0099E-05 | 2.33E-06 | -2.00E-07 | 1.25E-08 | -5.56E-10 | 1.67E-11 | -3.02E-13 | 2.50E-15 |
| L5 | S1 | -1.35E-05 | 1.46E-06 | -1.17E-07 | 6.80E-09 | -2.78E-10 | 7.61E-12 | -1.24E-13 | 9.15E-16 |
| | S2 | -4.91E-07 | 4.80E-08 | -3.61E-09 | 2.03E-10 | -8.20E-12 | 2.21E-13 | -3.57E-15 | 2.57E-17 |
| L6 | S1 | -3.87E-07 | 2.80E-08 | -1.47E-09 | 5.56E-11 | -1.45E-12 | 2.48E-14 | -2.50E-16 | 1.12E-18 |
| | S2 | -8.62E-08 | 4.12E-09 | -1.42E-10 | 3.47E-12 | -5.93E-14 | 6.70E-16 | -4.50E-18 | 1.36E-20 |
| L7 | S1 | -3.77E-08 | 1.28E-09 | -3.15E-11 | 5.62E-13 | -7.03E-15 | 5.85E-17 | -2.91E-19 | 6.55E-22 |
| | S2 | -2.45E-08 | 8.21E-10 | -2.01E-11 | 3.56E-13 | -4.42E-15 | 3.65E-17 | -1.80E-19 | 3.99E-22 |

It may be learned from Table 4c that the first lens L1 to the seventh lens L7 include 14 surfaces in total, and all the 14 surfaces are aspheric surfaces. A surface shape z of each even-order aspheric surface satisfies: $z = \frac{{cr}^{2}}{1 + \sqrt{1 - {Kc}^{2} {r}^{2}}} + {\sum }_{i} {Air}^{i}$

Herein, z is a sag of the aspheric surface, r is a radial coordinate of the aspheric surface, c is a vertex curvature of the aspheric surface, K is a conic constant, and Ai represents an i^{th}-order aspheric coefficient.

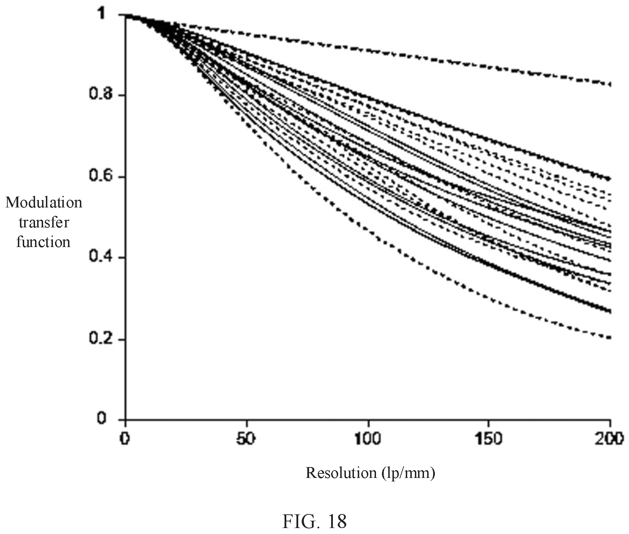

FIG. 18 is a diagram of performance curves at different spatial frequencies for the camera module 20 in this example. In FIG. 18, solid lines represent modulation transfer functions (MTFs) of light at different spatial frequencies in a sagittal direction, and dashed lines represent modulation transfer functions of light at different spatial frequencies in a tangential direction. It may be learned from FIG. 18 that when the resolution is less than 100 lp/mm, modulation transfer functions corresponding to the curves are all greater than 45%. In other words, modulation transfer functions in different fields of view are high in both the sagittal direction and the tangential direction, so that the camera module 20 has high imaging quality.

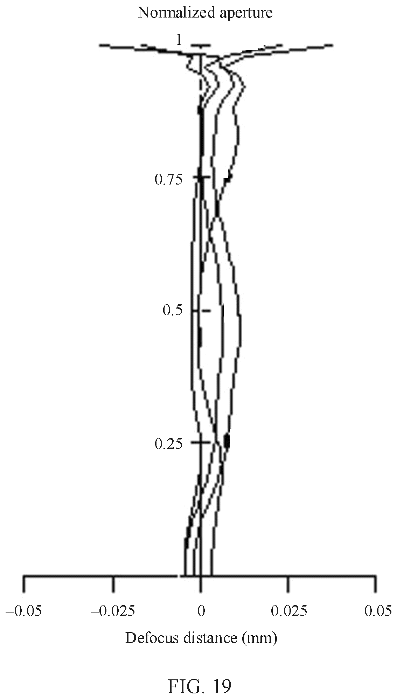

FIG. 19 is a diagram of an optical axial chromatic aberration of the camera module 20 in this example. Different curves in FIG. 19 correspond to light of different wavelengths, a vertical coordinate represents a normalized aperture, and a horizontal coordinate represents a defocus distance (a distance from the optical axis). It may be learned from FIG. 19 that an axial chromatic aberration of the camera module 20 in this example is good.

### Example 5

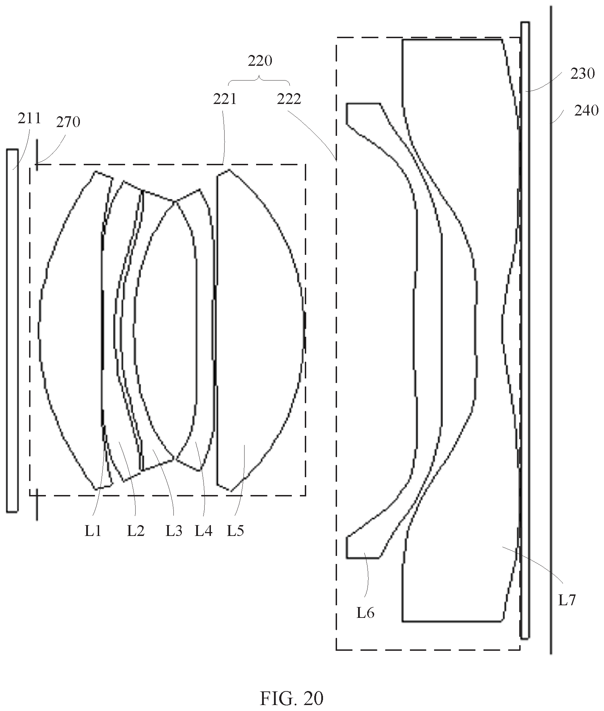

As shown in FIG. 20, in this example, the first lens group 221 includes a first lens L1, a second lens L2, a third lens L3, a fourth lens L4, and a fifth lens L5 that are disposed along a direction away from the light-transmitting cover plate 211, and the second lens group 222 includes a sixth lens L6 and a seventh lens L7 that are disposed along a direction away from the first lens group 221. Focal powers of the first lens L1, the third lens L3, the fifth lens L5, and the sixth lens L6 are all positive, and focal powers of the second lens L2, the fourth lens L4, and the seventh lens L7 are all negative.

In some examples, the f-number F of the camera module 20, the focal length EFL of the camera module 20 at infinity, the maximum image height IH of the optical sensor 240, and the length TTL of the lens assembly 220 along the optical axis direction when the light-transmitting cover plate 211 is in the second position satisfy: $\frac{{IH}^{2}}{{FTTL}^{2}} = 2.16$. The maximum entrance pupil diameter EPD of the camera module 20 and the focal length EFL of the camera module 20 at infinity satisfy: $\frac{EFL}{EPD} = 1.18$. A refractive index ind1 of the first lens is 1.855. A distance ct between the first lens and the second lens along the optical axis direction is 0.04 mm. The distance maxct = 2.79 mm between the first lens group 221 and the second lens group 222 along the optical axis direction when the light-transmitting cover plate 211 is in the first position and the length TTL of the lens assembly 220 along the optical axis direction when the light-transmitting cover plate 211 is in the second position satisfy: $\frac{maxct}{TTL} = 0.268$. The focal length f1 of the first lens group 221, the focal length f2 of the second lens group 222, and the focal length f of the lens assembly 220 satisfy: $\frac{f 1}{f} = 0.97$, and $\frac{f 2}{f} = - 1.42$.

Table 5a shows basic parameters of the camera module 20.

**Table 5a**

| Optical parameters | |
|---|---|
| Focal length f/mm | 9.59 |
| F | 1.18 |
| IH/mm | 16.62 |
| maxct/mm | 2.79 |
| TTL/mm | 10.4 |

Table 5b shows parameters of the lenses, where L1 is the first lens, L2 is the second lens, L3 is the third lens, L4 is the fourth lens, L5 is the fifth lens, L6 is the sixth lens, L7 is the seventh lens, S1 is a light incident surface of a corresponding lens, and S2 is a light exit surface of a corresponding lens.

**Table 5b**

| Lens | Surface number | Radius of curvature | Thickness | Refractive index | Abbe number |
|---|---|---|---|---|---|
| | Aperture stop | Infinity | 0.04 | | |
| L1 | S1 | 5.971 | 1.60 | 1.855 | 40.3 |
| | S2 | -43.774 | 0.04 | | |
| L2 | S1 | -30.580 | 0.29 | 1.634 | 22.9 |
| | S2 | 5.136 | 0.17 | | |
| L3 | S1 | 6.865 | 0.34 | 1.687 | 19.2 |
| | S2 | 8.716 | 1.60 | | |
| L4 | S1 | 31.372 | 0.40 | 1.677 | 19.2 |
| | S2 | 11.977 | 0.09 | | |
| L5 | S1 | 22.253 | 2.28 | 1.5458 | 55.98 |
| | S2 | -5.954 | 2.79 | | |
| L6 | S1 | 14.282 | 0.72 | 1.5697 | 37.41 |
| | S2 | 21.376 | 0.88 | | |
| L7 | S1 | 12.219 | 0.69 | 1.5458 | 55.98 |
| | S2 | 3.964 | 0.49 | | |
| IR (optical filter) | S1 | Infinity | 0.21 | 1.518 | 64.2 |
| | S2 | Infinity | 0.55 | | |
| | Image surface | Infinity | 0 | | |

Table 5c shows conic constants and aspheric coefficients of the lenses.

**Table 5c**

| | | Conic constant K | A2 | A4 | A6 | A8 | A10 | A12 | A14 |
|---|---|---|---|---|---|---|---|---|---|
| L1 | S1 | -0.108489 | 0 | 4.804E-06 | 1.668E-06 | 1.971E-06 | -2.887E-06 | 4.162E-07 | 3.283E-07 |
| | S2 | 30.313591 | 0 | 7.082E-03 | -2.810E-03 | 1.254E-03 | -4.749E-04 | 1.426E-04 | -3.247E-05 |
| L2 | S1 | 34.22358275 | 0 | 6.758E-03 | -3.016E-03 | 1.877E-03 | -8.621E-04 | 2.875E-04 | -6.966E-05 |
| | S2 | 0.890705872 | 0 | -7.295E-03 | 8.431E-04 | -1.693E-04 | 1.329E-04 | -1.208E-04 | 5.951E-05 |
| L3 | S1 | 4.864345815 | 0 | 3.068E-03 | -9.930E-04 | 2.265E-04 | 7.696E-05 | -1.337E-04 | 7.359E-05 |
| | S2 | -1.0550126 | 0 | 5.118E-03 | -3.543E-04 | -3.173E-04 | 4.983E-04 | -3.614E-04 | 1.611E-04 |
| L4 | S1 | 11.55654661 | 0 | -8.473E-03 | 3.852E-03 | -3.578E-03 | 2.359E-03 | -1.108E-03 | 3.764E-04 |
| | S2 | -11.2595992 | 0 | -8.579E-03 | 3.010E-03 | -1.686E-03 | 6.657E-04 | -1.949E-04 | 4.439E-05 |
| L5 | S1 | -24.981164 | 0 | -3.571E-03 | 1.563E-03 | -6.870E-04 | 1.344E-04 | 3.462E-06 | -7.971E-06 |
| | S2 | 0.146742836 | 0 | -1.522E-03 | 1.025E-03 | -8.366E-04 | 4.422E-04 | -1.577E-04 | 3.920E-05 |
| L6 | S1 | 1.427051577 | 0 | -4.110E-03 | 1.546E-03 | -8.076E-04 | 2.458E-04 | -4.921E-05 | 6.771E-06 |
| | S2 | 4.599520024 | 0 | -4.147E-03 | 8.279E-04 | -4.617E-04 | 1.289E-04 | -2.286E-05 | 2.754E-06 |
| L7 | S1 | -1 | 0 | -2.053E-02 | 1.547E-03 | -1.955E-04 | 4.117E-05 | -5.705E-06 | 4.922E-07 |
| | S2 | -1 | 0 | -1.827E-02 | 1.830E-03 | -1.754E-04 | 1.735E-05 | -1.431E-06 | 8.661E-08 |
| | | A16 | A18 | A20 | A22 | A24 | A26 | A28 | A30 |
| L1 | S1 | -1.83E-07 | 4.49E-08 | -6.61E-09 | 6.29E-10 | -3.900E-11 | 1.529E-12 | -3.44572E -14 | 3.4015E-16 |
| | S2 | 5.52E-06 | -6.91E-07 | 6.26E-08 | -3.98E-09 | 1.70E-10 | -4.50E-12 | 6.37175E -14 | -3.196E-16 |
| L2 | S1 | 1.24E-05 | -1.61E-06 | 1.52E-07 | -1.03E-08 | 4.79E-10 | -1.47E-11 | 2.63E-13 | -2.089E-15 |
| | S2 | -1.80E-05 | 3.58E-06 | -4.87E-07 | 4.52E-08 | -2.83E-09 | 1.14E-10 | - 2.64121E -12 | 2.691E-14 |
| L3 | S1 | -2.35E-05 | 4.86E-06 | -6.81E- | 6.52E-08 | -4.20E- | 1.74E-10 | -4.17E- | 4.392E- |
| | | | | 07 | | 09 | | 12 | 14 |
| | S2 | -4.76E-05 | 9.69E-06 | -1.38E-06 | 1.37E-07 | -9.26E-09 | 4.09E-10 | -1.06E-11 | 1.21E-13 |
| L4 | S1 | -9.36E-05 | 1.71E-05 | -2.29E-06 | 2.21E-07 | -1.51E-08 | 6.82E-10 | -1.85E-11 | 2.27E-13 |
| | S2 | -7.872E-06 | 1.06E-06 | -1.04E-07 | 7.29E-09 | -3.44E-10 | 1.02E-11 | -1.61E-13 | 9.07E-16 |
| L5 | S1 | 2.06E-06 | -3.01E-07 | 2.90E-08 | -1.92E-09 | 8.71E-11 | -2.59E-12 | 4.55E-14 | -3.60E-16 |
| | S2 | -6.95E-06 | 8.89E-07 | -8.23E-08 | 5.45E-09 | -2.52E-10 | 7.72E-12 | -1.41E-13 | 1.16E-15 |
| L6 | S1 | -6.56E-07 | 4.52E-08 | -2.22E-09 | 7.66E-11 | -1.80E-12 | 2.69E-14 | -2.26E-16 | 7.74E-19 |
| | S2 | -2.31E-07 | 1.36E-08 | -5.73E-10 | 1.71E-11 | -3.55E-13 | 4.88E-15 | -4.01E-17 | 1.49E-19 |
| L7 | S1 | -2.74E-08 | 9.85E-10 | -2.11E-11 | 1.76E-13 | 3.29E-15 | -1.13E-16 | 1.31E-18 | -5.77E-21 |
| | S2 | -3.77E-09 | 1.19E-10 | -2.71E-12 | 4.46E-14 | -5.16E-16 | 4.00E-18 | -1.87E-20 | 3.97E-23 |

It may be learned from Table 5c that the first lens L1 to the seventh lens L7 include 14 surfaces in total, and all the 14 surfaces are aspheric surfaces. A surface shape z of each even-order aspheric surface satisfies: $z = \frac{{cr}^{2}}{1 + \sqrt{1 - {Kc}^{2} {r}^{2}}} + {\sum }_{i} {Air}^{i}$

Herein, z is a sag of the aspheric surface, r is a radial coordinate of the aspheric surface, c is a vertex curvature of the aspheric surface, K is a conic constant, and Ai represents an i^{th}-order aspheric coefficient.

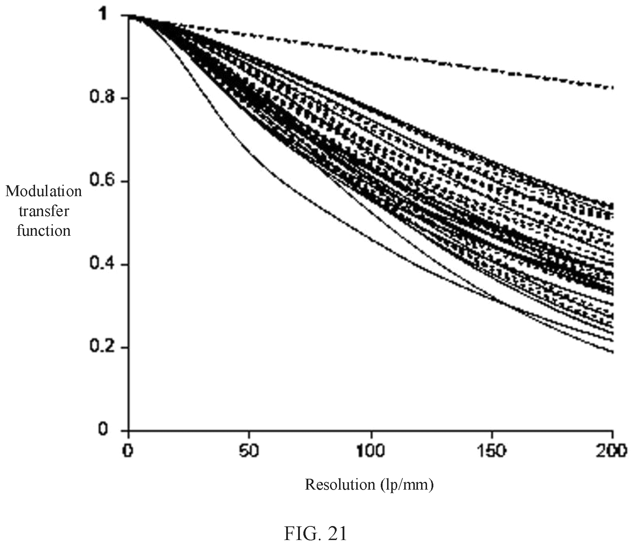

FIG. 21 is a diagram of performance curves at different spatial frequencies for the camera module 20 in this example. In FIG. 21, solid lines represent modulation transfer functions (MTFs) of light at different spatial frequencies in a sagittal direction, and dashed lines represent modulation transfer functions of light at different spatial frequencies in a tangential direction. It may be learned from FIG. 21 that when the resolution is less than 100 lp/mm, modulation transfer functions corresponding to the curves are all greater than 45%. In other words, modulation transfer functions in different fields of view are high in both the sagittal direction and the tangential direction, so that the camera module 20 has high imaging quality.

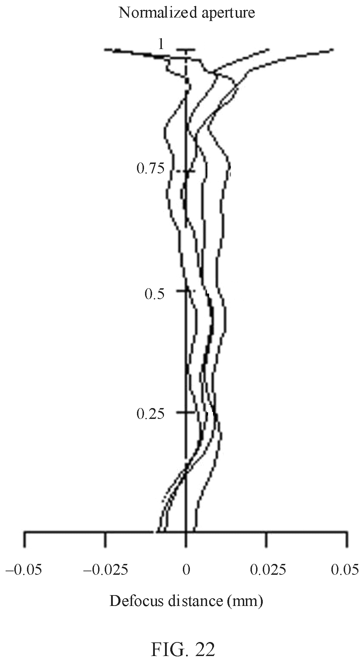

FIG. 22 is a diagram of an optical axial chromatic aberration of the camera module 20 in this example. Different curves in FIG. 22 correspond to light of different wavelengths, a vertical coordinate represents a normalized aperture, and a horizontal coordinate represents a defocus distance (a distance from the optical axis). It may be learned from FIG. 22 that an axial chromatic aberration of the camera module 20 in this example is good.

### Example 6

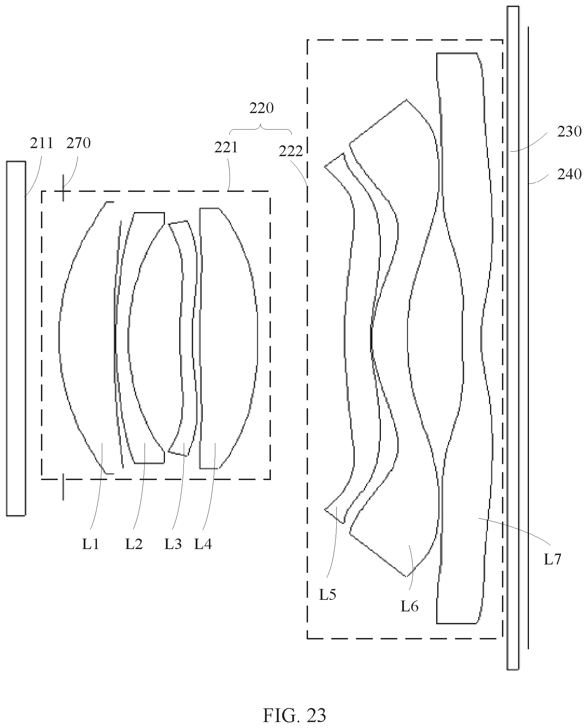

Refer to FIG. 23. In this example, the first lens group 221 includes a first lens L1, a second lens L2, a third lens L3, and a fourth lens L4 that are disposed along a direction away from the light-transmitting cover plate 211, and the second lens group 222 includes a fifth lens L5, a sixth lens L6, and a seventh lens L7 that are disposed along a direction away from the first lens group 221. Focal powers of the first lens L1, the fourth lens L4, and the sixth lens L6 are all positive, and focal powers of the second lens L2, the third lens L3, the fifth lens L5, and the seventh lens L7 are all negative.

In some examples, the f-number F of the camera module 20, the focal length EFL of the camera module 20 at infinity, the maximum image height IH of the optical sensor 240, and the length TTL of the lens assembly 220 along the optical axis direction when the light-transmitting cover plate 211 is in the second position satisfy: $\frac{{IH}^{2}}{{FTTL}^{2}} = 2.04$. The maximum entrance pupil diameter EPD of the camera module 20 and the focal length EFL at infinity of the camera module 20 satisfy: $\frac{EFL}{EPD} = 1.29$. A refractive index ind1 of the first lens is 1.754. A distance ct between the first lens and the second lens along the optical axis direction is 0.05 mm. The distance maxct = 2.3235 mm between the first lens group 221 and the second lens group 222 along the optical axis direction when the light-transmitting cover plate 211 is in the first position and the length TTL of the lens assembly 220 along the optical axis direction when the light-transmitting cover plate 211 is in the second position satisfy: $\frac{maxct}{TTL} = 0.226$. The focal length f1 of the first lens group 221, the focal length f2 of the second lens group 222, and the focal length f of the lens assembly 220 satisfy: $\frac{f 1}{f} = 1.12$, and $\frac{f 2}{f} = - 2.17$.

Table 6a shows basic parameters of the camera module 20.

**Table 6a**

| Optical parameters | |
|---|---|
| Focal length f/mm | 9.3914 |
| F | 1.29 |
| Focal length f/mm | 9.3914 |
| IH/mm | 16.64 |
| maxct/mm | 2.3235 |
| TTL/mm | 10.25 |

Table 6b shows parameters of the lenses, where L1 is the first lens, L2 is the second lens, L3 is the third lens, L4 is the fourth lens, L5 is the fifth lens, L6 is the sixth lens, L7 is the seventh lens, S1 is a light incident surface of a corresponding lens, and S2 is a light exit surface of a corresponding lens.

**Table 6b**

| Lens | Surface number | Radius of curvature | Thickness | Refractive index | Abbe number |
|---|---|---|---|---|---|
| | Aperture stop | Infinity | -0.1 | | |
| L1 | S1 | 5.605210287 | 1.474835175 | 1.754 | 42.5 |
| | S2 | 34.57401269 | 0.05 | | |
| L2 | S1 | 11.63482562 | 0.33 | 1.677 | 19.24 |
| | S2 | 5.067156649 | 1.368376568 | | |
| L3 | S1 | 8.94865175 | 0.33 | 1.677 | 19.24 |
| | S2 | 6.723817474 | 0.207894246 | | |
| L4 | S1 | 22.38573653 | 1.550596062 | 1.545 | 56 |
| | S2 | -9.22999601 | 2.323534686 | | |
| L5 | S1 | 17.04882778 | 0.68864958 | 1.57 | 37.4 |
| | S2 | 3.359401233 | 0.03 | | |
| L6 | S1 | 2.326338626 | 0.957140615 | 1.558 | 45.34 |
| | S2 | 8.376201212 | 1.456109526 | | |
| L7 | S1 | 9.914426396 | 0.5 | 1.536 | 55.7 |
| | S2 | 3.254382608 | 0.718293384 | | |
| IR (optical filter) | S1 | Infinity | 0.31 | 1.518 | 64.2 |
| | S2 | Infinity | 0.2381 | | |
| | Image surface | Infinity | 0 | | |

Table 6c shows conic constants and aspheric coefficients of the lenses.

**Table 6c**

| | | Conic constant K | A2 | A4 | A6 | A8 | A10 | A12 | A14 |
|---|---|---|---|---|---|---|---|---|---|
| L1 | S1 | 5.123E-02 | 0.000E+00 | -3.406E-04 | 5.354E-04 | -4.836E-04 | 2.520E-04 | -8.092E-05 | 1.562E-05 |
| | S2 | 7.222E+01 | 0.000E+00 | 4.436E-04 | 1.707E-04 | 7.124E-04 | -8.749E-04 | 5.003E-04 | -1.796E-04 |
| L2 | S1 | 9.267E-01 | 0.000E+00 | -4.686E-03 | 2.177E-03 | 4.785E-04 | -1.294E-03 | 8.884E-04 | -3.648E-04 |
| | S2 | -5.545E-01 | 0.000E+00 | -4.768E-03 | 1.011E-03 | 1.300E-03 | -1.749E-03 | 1.142E-03 | -4.766E-04 |
| L3 | S1 | -3.543E+01 | 0.000E+00 | -8.110E-03 | 4.310E-03 | -5.712E-03 | 4.990E-03 | -3.030E-03 | 1.304E-03 |
| | S2 | -6.965E+00 | 0.000E+0 0 | -1.351E-02 | 5.915E-03 | -5.082E-03 | 3.454E-03 | -1.720E-03 | 6.210E-04 |
| L4 | S1 | 2.500E+01 | 0.000E+0 0 | -4.907E-03 | 1.824E-03 | -1.243E-03 | 6.252E-04 | -2.228E-04 | 5.518E-05 |
| | S2 | 0.000E+00 | 0.000E+0 0 | -2.551E-03 | 1.691E-04 | -1.344E-04 | 6.733E-05 | -2.178E-05 | 4.572E-06 |
| L5 | S1 | 0.000E+00 | 0.000E+0 0 | 4.483E-03 | -3.316E-03 | 1.674E-03 | -6.054E-04 | 1.548E-04 | -2.857E-05 |
| | S2 | -1.000E+00 | 0.000E+0 0 | -5.395E-02 | 1.795E-02 | -5.077E-03 | 1.124E-03 | -1.913E-04 | 2.466E-05 |
| L6 | S1 | -1.000E+00 | 0.000E+0 0 | -5.090E-02 | 1.907E-02 | -6.107E-03 | 1.447E-03 | -2.547E-04 | 3.308E-05 |
| | S2 | 0.000E+00 | 0.000E+0 0 | 1.173E-02 | -2.822E-03 | 4.150E-04 | -5.695E-05 | 6.528E-06 | -5.535E-07 |
| L7 | S1 | 0.000E+00 | 0.000E+0 0 | -3.813E-02 | 7.870E-03 | -1.353E-03 | 1.918E-04 | -1.967E-05 | 1.420E-06 |
| | S2 | -1.000E+00 | 0.000E+0 0 | -4.142E-02 | 8.720E-03 | -1.464E-03 | 1.822E-04 | -1.629E-05 | 1.043E-06 |
| | | A16 | A18 | A20 | A22 | A24 | A26 | A28 | A30 |
| L1 | S1 | -1.431E-06 | -8.453E-08 | 4.501E-08 | -6.586E-09 | 5.436E-10 | -2.702E-11 | 7.572E-13 | -9.237E-15 |
| | S2 | 4.415E-05 | -7.693E-06 | 9.616E-07 | -8.580E-08 | 5.341E-09 | -2.205E-10 | 5.433E-12 | -6.046E-14 |
| L2 | S1 | 1.016E-04 | -1.999E-05 | 2.817E-06 | -2.827E-07 | 1.975E-08 | -9.132E-10 | 2.511E-11 | -3.110E-13 |
| | S2 | 1.357E-04 | -2.694E-05 | 3.729E-06 | -3.532E-07 | 2.182E-08 | -7.925E-10 | 1.284E-11 | 0.000E+0 0 |
| L3 | S1 | -4.044E-04 | 9.126E-05 | -1.498E-05 | 1.770E-06 | -1.465E-07 | 8.060E-09 | -2.647E-10 | 3.926E-12 |
| | S2 | -1.639E-04 | 3.179E-05 | -4.518E-06 | 4.645E-07 | -3.358E-08 | 1.618E-09 | -4.659E-11 | 6.067E-13 |
| L4 | S1 | -9.460E-06 | 1.099E-06 | -7.917E-08 | 2.288E-09 | 1.507E-10 | -1.876E-11 | 7.918E-13 | -1.279E-14 |
| | S2 | -5.690E-07 | 2.108E-08 | 6.166E-09 | -1.316E-09 | 1.305E-10 | -7.455E-12 | 2.358E-13 | -3.207E-15 |
| L5 | S1 | 3.851E-06 | -3.805E-07 | 2.741E-08 | -1.417E-09 | 5.106E-11 | -1.213E-12 | 1.704E-14 | -1.070E-16 |
| | S2 | -2.378E-06 | 1.697E-07 | -8.851E-09 | 3.307E-10 | -8.571E-12 | 1.453E-13 | -1.438E-15 | 6.227E-18 |
| L6 | S1 | -3.155E-06 | 2.200E-07 | -1.112E-08 | 4.015E-10 | -1.005E-11 | 1.653E-13 | -1.604E-15 | 6.952E-18 |
| | S2 | 3.347E-08 | -1.437E-09 | 4.370E-11 | -9.279E-13 | 1.330E-14 | -1.203E-16 | 5.944E-19 | -1.105E-21 |
| L7 | S1 | -7.313E-08 | 2.730E-09 | -7.421E-11 | 1.457E-12 | -2.014E-14 | 1.861E-16 | -1.031E-18 | 2.590E-21 |
| | S2 | -4.828E-08 | 1.623E-09 | -3.963E-11 | 6.945E-13 | -8.510E-15 | 6.920E-17 | -3.355E-19 | 7.337E-22 |

It may be learned from Table 6c that the first lens L1 to the seventh lens L7 include 14 surfaces in total, and all the 14 surfaces are aspheric surfaces. A surface shape z of each even-order aspheric surface satisfies: $z = \frac{{cr}^{2}}{1 + \sqrt{1 - {Kc}^{2} {r}^{2}}} + {\sum }_{i} {Air}^{i}$

Herein, z is a sag of the aspheric surface, r is a radial coordinate of the aspheric surface, c is a vertex curvature of the aspheric surface, K is a conic constant, and Ai represents an i^{th}-order aspheric coefficient.

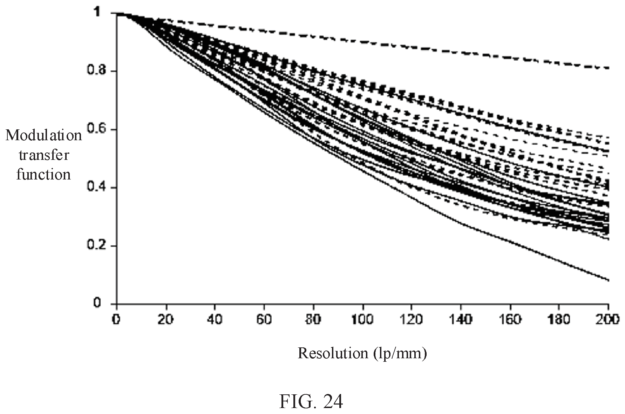

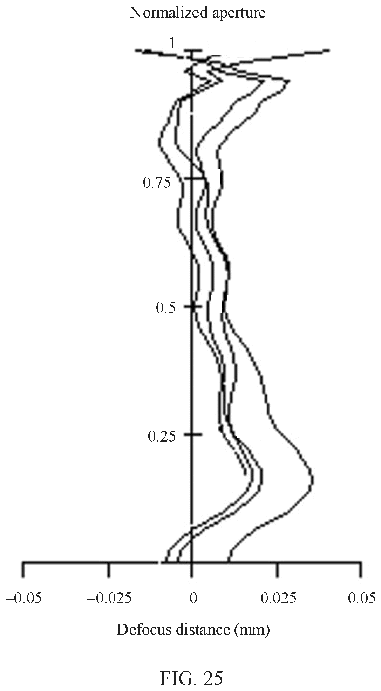

FIG. 24 is a diagram of performance curves at different spatial frequencies for the camera module 20 in this example. In FIG. 24, solid lines represent modulation transfer functions (MTFs) of light at different spatial frequencies in a sagittal direction, and dashed lines represent modulation transfer functions of light at different spatial frequencies in a tangential direction. It may be learned from FIG. 24 that when the resolution is less than 100 lp/mm, modulation transfer functions corresponding to the curves are all greater than 45%. In other words, modulation transfer functions in different fields of view are high in both the sagittal direction and the tangential direction, so that the camera module 20 has high imaging quality. FIG. 25 is a diagram of an optical axial chromatic aberration of the camera module 20 in this example. Different curves in FIG. 25 correspond to light of different wavelengths, a vertical coordinate represents a normalized aperture, and a horizontal coordinate represents a defocus distance (a distance from the optical axis). It may be learned from FIG. 25 that an axial chromatic aberration of the camera module 20 in this example is good.

The foregoing descriptions are merely specific implementations of embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module, comprising:
an optical sensor;
a lens assembly, wherein the optical sensor is disposed on an image side of the lens assembly, the lens assembly comprises a plurality of lenses disposed along an optical axis direction, and a focal length f0 of the lens, among the plurality of lenses, that is away from the optical sensor and a maximum entrance pupil diameter EPD of the camera module satisfy: $1 \leq \frac{f 0}{EPD} \leq 1.8 ;$ and
a focus adjustment apparatus, wherein the focus adjustment apparatus is connected to the lens assembly to perform focus adjustment.

2. The camera module according to claim 1, wherein the lens assembly comprises a first lens group and a second lens group that are disposed along the optical axis direction, and the second lens group is located between the first lens group and the optical sensor; each of the first lens group and the second lens group comprises at least two lenses; and a focal power of the first lens group is positive, a focal power of the second lens group is negative, and a focal power of the lens assembly is positive.

3. The camera module according to claim 2, wherein the focus adjustment apparatus is connected to the first lens group, to drive the first lens group to move along the optical axis.

4. The camera module according to claim 3, wherein the camera module further comprises a lens holder, a light-transmitting channel is provided on the lens holder, the lens assembly is disposed in the light-transmitting channel, a guide post is disposed on a side wall of the light-transmitting channel, and a center line of the guide post is parallel to the optical axis; a guide groove is provided on a side wall of the first lens group, and the guide post is slidably disposed in the guide groove; and the focus adjustment apparatus is connected to the guide groove.

5. The camera module according to any one of claims 2 to 4, wherein a focal length f1 of the first lens group, a focal length f2 of the second lens group, and a focal length f of the lens assembly satisfy: $0 < \frac{f 1}{f} < 1.2 , and \frac{f 2}{f} < 0 .$

6. The camera module according to any one of claims 2 to 5, wherein a refractive index ind1 of the lens, among the plurality of lenses, that is away from the optical sensor satisfies: 1.6 < ind1.

7. The camera module according to any one of claims 2 to 6, wherein a distance ct, along the optical axis direction, between the two adjacent lenses that are in the first lens group and that are away from the optical sensor satisfies: 0.03 mm < ct < 0.2 mm.

8. The camera module according to any one of claims 2 to 7, wherein the first lens group comprises a first lens, a second lens, a third lens, a fourth lens, and a fifth lens that are disposed along a direction toward the optical sensor, and the second lens group comprises a sixth lens and a seventh lens that are disposed along a direction away from the first lens group.

9. The camera module according to claim 8, wherein focal powers of the first lens, the fourth lens, the fifth lens, and the sixth lens are all positive, and focal powers of the second lens, the third lens, and the seventh lens are all negative.

10. The camera module according to claim 8, wherein focal powers of the first lens, the fifth lens, and the sixth lens are all positive, and focal powers of the second lens, the third lens, the fourth lens, and the seventh lens are all negative.

11. The camera module according to claim 8, wherein focal powers of the first lens, the third lens, the fifth lens, and the sixth lens are all positive, and focal powers of the second lens, the fourth lens, and the seventh lens are all negative.

12. The camera module according to any one of claims 2 to 7, wherein the first lens group comprises a first lens, a second lens, a third lens, and a fourth lens that are disposed along a direction toward the optical sensor, and the second lens group comprises a fifth lens, a sixth lens, and a seventh lens that are disposed along a direction away from the first lens group.

13. The camera module according to claim 12, wherein focal powers of the first lens, the fourth lens, and the sixth lens are all positive, and focal powers of the second lens, the third lens, the fifth lens, and the seventh lens are all negative.

14. The camera module according to any one of claims 2 to 13, wherein the camera module further comprises a light-transmitting cover plate and a driving apparatus, and the light-transmitting cover plate is disposed on an object side of the lens assembly; and the driving apparatus is connected to the light-transmitting cover plate, the driving apparatus is configured to, in response to a first operation of a user, drive the light-transmitting cover plate to move to a first position in a direction away from the lens assembly, and the driving apparatus is further configured to, in response to a second operation of the user, drive the light-transmitting cover plate to move to a second position in a direction toward the lens assembly.

15. The camera module according to claim 14, wherein the camera module further comprises a telescopic apparatus, the telescopic apparatus is disposed on the object side of the lens assembly, the telescopic apparatus and the lens assembly are spaced apart, and the light-transmitting cover plate is disposed at an end that is of the telescopic apparatus and that is away from the lens assembly; and the driving apparatus is connected to the telescopic apparatus, to drive the telescopic apparatus to move along a direction parallel to the optical axis.

16. The camera module according to claim 14 or 15, wherein an f-number F of the camera module, the maximum entrance pupil diameter EPD of the camera module, a focal length EFL at infinity of the camera module, a maximum image height IH of the optical sensor, and a length TTL of the lens assembly along the optical axis direction when the light-transmitting cover plate is in the second position satisfy: $1.8 < \frac{{IH}^{2}}{{FTTL}^{2}} < 3 , and \frac{EFL}{EPD} < 1.6 .$

17. The camera module according to any one of claims 14 to 16, wherein a distance maxct between the first lens group and the second lens group along the optical axis direction when the light-transmitting cover plate is in the first position satisfies: 5 mm > maxct > 1 mm.

18. The camera module according to any one of claims 14 to 17, wherein the distance maxct between the first lens group and the second lens group along the optical axis direction when the light-transmitting cover plate is in the first position and the length TTL of the lens assembly along the optical axis direction when the light-transmitting cover plate is in the second position satisfy: $0.1 < \frac{maxct}{TTL} < 0.5 .$

19. The camera module according to any one of claims 14 to 18, wherein the distance maxct between the first lens group and the second lens group along the optical axis direction when the light-transmitting cover plate is in the first position and the maximum image height IH of the optical sensor satisfy: $0.1 < \frac{maxct}{IH} < 0.5 .$

20. An electronic device, comprising a housing and the camera module according to any one of claims 1 to 13, wherein the camera module is disposed on the housing.

21. The electronic device according to claim 20, wherein the electronic device further comprises a light-transmitting cover plate and a driving apparatus, and the light-transmitting cover plate is disposed on an object side of the lens assembly; and the driving apparatus is connected to the light-transmitting cover plate, the driving apparatus is configured to, in response to a first operation of a user, drive the light-transmitting cover plate to move to a first position in a direction away from the lens assembly, and the driving apparatus is further configured to, in response to a second operation of the user, drive the light-transmitting cover plate to move to a second position in a direction toward the lens assembly.

22. The electronic device according to claim 21, wherein the electronic device further comprises a telescopic apparatus, the telescopic apparatus is disposed on the object side of the lens assembly, the telescopic apparatus and the lens assembly are spaced apart, and the light-transmitting cover plate is disposed at an end that is of the telescopic apparatus and that is away from the lens assembly; and the driving apparatus is connected to the telescopic apparatus, to drive the telescopic apparatus to move along a direction parallel to the optical axis.

23. The electronic device according to claim 21 or 22, wherein the housing encloses an accommodating cavity, an opening communicated with the accommodating cavity is provided on the housing, at least a part of the camera module is disposed in the accommodating cavity, and the light-transmitting cover plate is disposed directly facing the opening; and the driving apparatus is configured to, in response to the first operation of the user, drive the light-transmitting cover plate to move out of the accommodating cavity.

24. An electronic device, comprising a housing and the camera module according to any one of claims 14 to 19, wherein the camera module is disposed on the housing.

25. The electronic device according to claim 24, wherein the housing encloses an accommodating cavity, an opening communicated with the accommodating cavity is provided on the housing, at least a part of the camera module is disposed in the accommodating cavity, and the light-transmitting cover plate is disposed directly facing the opening; and the driving apparatus is configured to, in response to a first operation of a user, drive the light-transmitting cover plate to move out of the accommodating cavity.
